(19) Europäisches Patentamt / European Patent Office / Office européen des brevets

(11) **EP 3 812 229 B1**

(12) **EUROPEAN PATENT SPECIFICATION**

(45) Date of publication and mention
of the grant of the patent:
**29.11.2023 Bulletin 2023/48**

(21) Application number: **20823715.6**

(22) Date of filing: **03.04.2020**

(51) International Patent Classification (IPC):
*B60W 30/18* (2012.01)        *B60W 40/02* (2006.01)
*B60W 40/105* (2012.01)       *B60T 13/58* (2006.01)
*B60T 13/74* (2006.01)        *B60W 30/09* (2012.01)
*B60T 7/22* (2006.01)

(52) Cooperative Patent Classification (CPC):
**B60T 7/22; B60T 13/586; B60W 30/09;**
**B60W 30/18127;** B60T 2201/022; B60T 2270/604;
B60W 2540/106; B60W 2540/12

(86) International application number:
**PCT/CN2020/083306**

(87) International publication number:
**WO 2021/031574 (25.02.2021 Gazette 2021/08)**

(54) **VEHICLE BRAKING CONTROL METHOD AND DEVICE**

FAHRZEUGSTEUERUNGSVERFAHREN UND -VORRICHTUNG

PROCÉDÉ ET DISPOSITIF DE COMMANDE DE FREINAGE DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **16.08.2019 CN 201910760496**

(43) Date of publication of application:
**28.04.2021 Bulletin 2021/17**

(73) Proprietor: **Huawei Technologies Co., Ltd.**
**Longgang District**
**Shenzhen**
**Guangdong 518129 (CN)**

(72) Inventor: **HE, Qiang**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
EP-A1- 2 186 698        EP-A1- 3 121 074
EP-A2- 2 460 701        CN-A- 101 913 352
CN-A- 104 129 380       CN-U- 205 256 317
DE-A1-102007 056 359    JP-A- 2000 264 184
US-A1- 2005 269 875     US-A1- 2010 299 036
US-A1- 2014 018 986

## Description

## TECHNICAL FIELD

This application relates to the field of vehicle safety technologies, and in particular, to a method and an apparatus for controlling vehicle braking.

## BACKGROUND

As a kind of new energy vehicles, electric vehicles have developed rapidly in recent years. At the same time, more people have begun to pay attention to the braking safety of electric vehicles.

At present, a braking system of an electric vehicle largely includes two parts: a motor braking system and a hydraulic braking system. The motor braking system responds quickly, and can use the power generation characteristics of the motor to convert the kinetic energy of the vehicle into electric energy for recovery and storage when the vehicle is braking, so that the power of the vehicle can support the vehicle in traveling farther. Therefore, in the braking system of the electric vehicle, when the vehicle is braking, the motor braking system preferentially provides braking force required by the vehicle. When motor braking force provided by the motor braking system is insufficient to reach the braking force required by the vehicle, hydraulic braking force provided by the hydraulic braking system is used to make up the difference.

The working process of the hydraulic braking system generally includes: eliminating a mechanical gap of the hydraulic braking system; pressing brake fluid into a brake wheel cylinder to build up braking pressure; and pressing a friction lining on the wheel cylinder against a brake disc of the wheel by the braking pressure, to generate braking force on the wheel. When the hydraulic braking system provides hydraulic braking force, the brake fluid is pressed into the wheel cylinder to build up the braking pressure. Due to the pressure-volume (P-V) characteristic of the wheel cylinder, the braking pressure increases slowly when the braking pressure begins to be built up, and can increase rapidly only after the braking pressure reaches a threshold. A pressure interval in which the braking pressure increases slowly from 0 to the foregoing threshold is generally referred to as a slow pressure build-up zone. Then, in the case of emergency braking, the motor braking system preferentially provides the motor braking force. When the motor braking force cannot reach the required braking force, the hydraulic braking system then provides hydraulic braking force. However, when the hydraulic braking system builds up the braking pressure, there is a slow pressure build-up zone. This severely affects the time taken for the hydraulic braking force to reach the braking force required by the vehicle, posing a great safety risk.

US 2010/299036 A1 discloses a method for controlling regenerative braking of a vehicle including at least one thermal engine and/or at least one electric motor, including calculating a GMP braking force setpoint at the wheel, including a regenerative braking force, that is independent from a relation between the brake pedal depression and the braking force applied to the wheels by the main brakes of the vehicle.

## SUMMARY

To resolve the problems of taking long time for emergency braking and posing a great safety risk in related technologies, embodiments of this invention provide a method and an apparatus for controlling vehicle braking. The invention is set out in the appended claims. The technical solutions are as follows:

According to a first aspect, a method for controlling vehicle braking is provided. The method includes:

obtaining an emergency braking probability of a vehicle; determining total braking force required for braking of the vehicle based on a current velocity of the vehicle and a current opening of a brake pedal of the vehicle; determining motor braking force and hydraulic braking force required for braking of the vehicle based on the emergency braking probability and the total braking force; and sending a control signal to a motor braking system and a hydraulic braking system of the vehicle based on the motor braking force and the hydraulic braking force, so that the motor braking system provides the motor braking force and the hydraulic braking system provides the hydraulic braking force.

In the solution shown in this embodiment of this invention, a vehicle control unit (Vehicle Control Unit, VCU) can periodically determine the emergency braking probability of the vehicle based on surrounding information of the vehicle, such as a distance between the vehicle and an obstacle ahead, and a driving velocity of a vehicle ahead. The emergency braking probability may indicate a possibility of performing emergency braking by the vehicle. An opening sensor may be installed on the brake pedal of the vehicle, and the opening sensor can detect an opening of the brake pedal in real time. The VCU obtains, in real time, the opening of the brake pedal detected by the opening sensor, and determines the total braking force required for braking of the vehicle based on the current velocity of the vehicle and the current opening of the brake pedal. After determining the total braking force, the VCU can allocate the total braking force based on the emergency braking probability obtained above, and determine, from the total braking force, the motor braking force that needs to be provided by the motor braking system and the hydraulic braking force that needs to be provided by the hydraulic braking system, respectively. The VCU can notify the motor braking system of the motor braking force through a control signal, and at the same time, can also notify the hydraulic braking system of the hydraulic braking force through a control signal. The control signal may be a controller area network (Controller Area Network, CAN) signal. After receiving the control signal, the motor braking system and the hydraulic braking system simultaneously generate corresponding braking force to brake the vehicle so that the vehicle speeds down.

In the solution provided in this invention, when allocating the braking force, the VCU no longer preferentially allocates the total braking force required for braking of the vehicle to the motor braking system, and then the hydraulic braking system makes a supplement, and no longer randomly allocates the motor braking system and the hydraulic braking system to provide corresponding braking force, either. Instead, the VCU allocates the total braking force required for braking of the vehicle based on the determined emergency braking probability. In this way, during the driving of the vehicle, the VCU obtains the emergency braking probability of the vehicle. If the obtained emergency braking probability is relatively large at a time t, it is considered that the vehicle is likely to perform emergency braking next. Herein, the emergency braking of the vehicle can be divided into two cases. One case is a conventional manually driven electric vehicle. The emergency braking of the vehicle means that a driver quickly lifts an accelerator pedal and quickly depresses a brake pedal, to instruct the braking system of the vehicle to provide braking force so that the vehicle quickly stops moving. The other case is an autonomously driven electric vehicle. The emergency braking of the vehicle means that the vehicle detects that a distance to a vehicle ahead is less than a safe distance, and the vehicle immediately sends a braking signal to the braking system, to instruct the braking system of the vehicle to provide braking force so that the vehicle quickly stops moving.

In the foregoing case in which at the time t, the emergency braking probability is relatively large, and the vehicle is likely to perform emergency braking next, based on the solution provided in this invention, when allocating the total braking force required for braking of the vehicle, the VCU instructs the hydraulic braking system to provide most or all of the braking force. For example, the total braking force is 100 N. In this case, the hydraulic braking force provided by the hydraulic braking system may be the entire 100 N. In this way, at a next time t', if the vehicle really needs to perform emergency braking, the required total braking force is, for example, 150 N. Then, because at the time t, the hydraulic braking system has provided the hydraulic braking force of 100 N, and the slow pressure build-up zone of the hydraulic braking system is 0 to 80 N, this means that the hydraulic braking system has gone through the slow pressure build-up zone when providing the hydraulic braking force at the time t. Therefore, at the time t', when providing additional hydraulic braking force of 50 N on the basis of 100 N, the hydraulic braking system does not need to go through the slow pressure build-up zone, and can quickly provide hydraulic braking force of 150 N. It can be learned that, according to the solution provided in this invention, the hydraulic braking system can quickly provide hydraulic braking force when the vehicle performs emergency braking, so that the vehicle can brake, thereby avoiding a problem that the hydraulic braking force is provided slowly due to the slow pressure build-up zone during emergency braking, and increasing safety of the vehicle.

In a possible implementation, the obtaining an emergency braking probability of a vehicle includes: determining the emergency braking probability of the vehicle based on a current opening change rate of the accelerator pedal of the vehicle, the current velocity of the vehicle, a current distance between the vehicle and an object ahead, and a current velocity of the object ahead.

In the solution shown in this embodiment of this invention, when the VCU determines the emergency braking probability of the vehicle, in addition to the surrounding information of the vehicle, for the manually driven electric vehicle, the VCU can further comprehensively consider a driver's operations on the accelerator pedal and the brake pedal to determine the emergency braking probability. An opening sensor may be installed on the accelerator pedal of the vehicle, and the opening sensor can detect an opening of the accelerator pedal in real time. The VCU obtains, in real time, the opening of the accelerator pedal detected by the opening sensor, and calculates a derivative of the opening of the accelerator pedal to obtain a current opening change rate (which can also be referred to as a current rate of the accelerator pedal) of the accelerator pedal. The obstacle perception sensor installed in the vehicle can detect the distance between the vehicle and the object ahead and the current moving velocity of the object ahead. In addition, the VCU can obtain the current velocity of the vehicle. The VCU can determine the emergency braking probability of the vehicle comprehensively based on the current opening change rate of the accelerator pedal, the current velocity of the vehicle, the current distance between the vehicle and the object ahead, and the current velocity of the object ahead that are obtained above. In this way, through comprehensive consideration of the surrounding information of the vehicle and operation information of the driver on the pedal, the determined emergency braking probability of the vehicle can be more accurate, and can better indicate an amplitude of the possibility of emergency braking of the vehicle.

According to the first aspect, the determining the emergency braking probability of the vehicle based on a current opening change rate of the accelerator pedal of the vehicle, a current velocity of the vehicle, a current distance between the vehicle and an object ahead, and a current velocity of the object ahead includes: determining a first emergency braking probability based on the current opening change rate of the accelerator pedal of the vehicle and the current velocity of the vehicle; determining a second emergency braking probability based on the current velocity of the vehicle, the current distance between the vehicle and the object ahead, and the current velocity of the object ahead; and determining the emergency braking probability of the vehicle based on the first emergency braking probability and the second emergency braking probability.

In the solution shown in this embodiment of this invention, the opening of the accelerator pedal may be a ratio of an included angle between a current position of the accelerator pedal and an initial position of the accelerator pedal without external force to a maximum angle that the accelerator pedal can move. The opening can be generally expressed as a percentage such as 10%. The object ahead may be another vehicle driving in front of the vehicle, a pedestrian, an animal, or a still object such as a tree.

When determining the emergency braking probability of the vehicle, the VCU obtains the first emergency braking probability based on the driver's operation on the accelerator pedal and the velocity of the vehicle. The driver's operation on the accelerator pedal can be expressed by an opening change rate of the accelerator pedal. The second emergency braking probability is obtained based on the moving velocity of the object in front of the vehicle, the distance between the object ahead and the vehicle, and the velocity of the vehicle. Then, the emergency braking probability of the vehicle is obtained comprehensively based on the first emergency braking probability and the second emergency braking probability. The emergency braking probability of the vehicle is determined based on the emergency braking probabilities that are obtained in two different manners. This can better indicate an amplitude of the possibility of emergency braking of the vehicle.

In a possible implementation, the determining a first emergency braking probability based on the current opening change rate of the accelerator pedal of the vehicle and the current velocity of the vehicle includes: determining a reference opening change rate corresponding to the current opening change rate of the accelerator pedal of the vehicle and the current velocity of the vehicle based on a prestored correspondence among the velocity of the vehicle, the opening of the accelerator pedal, and a reference opening change rate of the accelerator pedal; determining a first difference between the current opening change rate of the accelerator pedal and the determined reference opening change rate; and determining the first emergency braking probability corresponding to the first difference based on a prestored correspondence between the difference and the emergency braking probability.

In the solution shown in this embodiment of this invention, the VCU can prestore the correspondence among the velocity of the vehicle, the opening of the accelerator pedal, and the reference opening change rate of the accelerator pedal. In this correspondence, when the velocity of the vehicle is constant, the reference opening change rate of the accelerator pedal is positively correlated with the opening of the accelerator pedal; when the opening of the accelerator pedal is constant, the reference opening change rate of the accelerator pedal is positively correlated with the velocity of the vehicle. In addition, a correspondence between the emergency braking probability and the difference between the opening change rate of the accelerator pedal and the reference opening change rate of the accelerator pedal may also be prestored. This correspondence is a correspondence between the emergency braking probability and a difference that is obtained by subtracting the opening change rate of the accelerator pedal from the reference opening change rate of the accelerator pedal. When the difference is less than a threshold a1, the emergency braking probability is 100%. When the difference is greater than the threshold a1 and less than a threshold b 1, the difference is negatively correlated with the emergency braking probability. When the difference is greater than or equal to the threshold b1, the emergency braking probability is 0. In addition, this correspondence may also be a correspondence between the emergency braking probability and a difference that is obtained by subtracting the reference opening change rate of the accelerator pedal from the opening change rate of the accelerator pedal. When the difference is less than a threshold a2, the emergency braking probability is 0. When the difference is greater than the threshold a2 and less than a threshold b2, the emergency braking probability is positively correlated with the difference. When the difference is greater than or equal to b2, the emergency braking probability is 1. After obtaining the current velocity of the vehicle and the current opening of the accelerator pedal, the VCU can determine the corresponding reference opening change rate of the accelerator pedal based on the foregoing correspondence among the velocity of the vehicle, the opening of the accelerator pedal, and the reference opening change rate of the accelerator pedal. Then, the difference between the current opening change rate of the accelerator pedal and the reference opening change rate of the accelerator pedal is calculated, and then the corresponding emergency braking probability is determined based on the foregoing correspondence between the emergency braking probability and the difference between the opening change rate of the accelerator pedal and the reference opening change rate of the accelerator pedal.

In a possible implementation, after the determining a first emergency braking probability, the method further includes: if the current opening change rate of the accelerator pedal is greater than a first threshold, detecting an opening of the brake pedal of the vehicle within preset duration after a current time; if it is detected that the current opening of the brake pedal is greater than a second threshold, and the current opening change rate of the brake pedal is greater than a third threshold, correcting the first emergency braking probability to 1; otherwise, correcting the first emergency braking probability to 0.

In the solution shown in this embodiment of this invention, to make the determined first emergency braking probability closer to the driver's true willingness, the determined first emergency braking probability can be corrected based on the driver's operation on the brake pedal. After the VCU determines the first emergency braking probability, if the VCU determines that the current opening change rate of the accelerator pedal is greater than the first threshold, it indicates that the driver has quickly lifted the accelerator pedal. Then, the opening of the brake pedal within the preset duration can be detected. If it is detected that the current opening of the brake pedal is greater than a second threshold and the current opening change rate of the brake pedal is greater than a third threshold, it indicates that the driver quickly depresses the brake pedal immediately after quickly lifting the accelerator pedal. It can be considered that the driver is very likely to perform emergency braking, and in this case, the first emergency braking probability can be corrected to 1. If it is not detected within the preset duration that the current opening of the brake pedal is greater than the second threshold and the current opening change rate of the brake pedal is greater than the third threshold, it indicates that the driver does not depress the brake pedal quickly after quickly lifting the accelerator pedal. It can be considered that the driver does not need to perform emergency braking, and quickly lifting the accelerator pedal may be just a driving habit of the driver. In this case, the first emergency braking probability can be corrected to 0. In this way, when the emergency braking probability of the vehicle is determined, the driver's willingness to brake the vehicle can be fully considered, so that the emergency braking probability can better indicate an amplitude of the possibility of emergency braking of the vehicle.

In a possible implementation, the determining a second emergency braking probability based on the current velocity of the vehicle, the current distance between the vehicle and the object ahead, and the current velocity of the object ahead includes: determining a target critical deceleration of the vehicle based on the current velocity of the vehicle, the current distance between the vehicle and the object ahead, and the current velocity of the object ahead; and determining the second emergency braking probability corresponding to the target critical deceleration based on a prestored correspondence between a critical deceleration and an emergency braking probability.

In the solution shown in this embodiment of this invention, the VCU can substitute the current velocity of the vehicle, the current distance between the vehicle and the object ahead, and the current velocity of the object ahead that are obtained into the following formula 1 to obtain the target critical deceleration of the vehicle. Formula 1: $a\_edge = (v - v\_obs)^2/(2 * L)$, where a_edge represents the critical deceleration, v represents the current velocity of the vehicle, v_obs represents the current velocity of the object ahead, and L represents the current distance between the vehicle and the object ahead. Then, the emergency braking probability corresponding to the target critical deceleration, that is, the second emergency braking probability, can be obtained based on a prestored correspondence between the critical deceleration and the emergency braking probability. Herein, the prestored correspondence between the critical deceleration and the emergency braking probability may be as follows: When the critical deceleration is less than a threshold c, the emergency braking probability can be 0; when the critical deceleration is greater than or equal to the threshold c and less than a threshold d, the emergency braking probability is positively correlated with the critical deceleration; when the critical deceleration is greater than or equal to the threshold d, the emergency braking probability can be 1 (which can also be expressed as 100%).

In a possible implementation, the determining the emergency braking probability of the vehicle based on the first emergency braking probability and the second emergency braking probability includes: determining a larger value between the first emergency braking probability and the second emergency braking probability as the emergency braking probability of the vehicle.

In the solution shown in this embodiment of this invention, the larger value of the first emergency braking probability and the second emergency braking probability can be determined as the emergency braking probability of the vehicle. In this way, during the driving of the vehicle, the vehicle needs to brake immediately to avoid danger. In this case, the second emergency braking probability determined based on the surrounding information of the vehicle is relatively large. However, at this time, the driver just lifts the accelerator pedal relatively slowly due to some reasons. Then, the first emergency braking probability determined based on the driver's operation on the accelerator pedal may be relatively small. According to the solution provided in this invention, the relatively large second emergency braking probability is determined as the emergency braking probability of the vehicle, and the VCU can allocate total braking force required for braking of the vehicle based on the relatively large second emergency braking probability, so that hydraulic braking force provided by the hydraulic braking system is relatively large. When the vehicle performs emergency braking, the hydraulic braking system can provide the hydraulic braking force relatively quickly, thereby braking the vehicle and increasing safety of the vehicle.

In a possible implementation, the determining motor braking force and hydraulic braking force required for braking of the vehicle based on the emergency braking probability and the total braking force includes: determining a motor braking force limit corresponding to the emergency braking probability of the vehicle based on a prestored correspondence between the emergency braking probability and the motor braking force limit; determining the motor braking force required for braking of the vehicle based on the motor braking force limit corresponding to the emergency braking probability of the vehicle; and determining hydraulic braking force required for braking of the vehicle based on a difference between the total braking force and the motor braking force.

In the solution shown in this embodiment of this invention, the VCU can prestore a correspondence between the emergency braking probability and the motor braking force limit. This correspondence may be as follows: When the emergency braking probability is greater than 0 and less than a threshold e, the motor braking force limit is unchanged and may be relatively large, for example, may be equal to maximum motor braking force that the motor braking system can provide. In this way, when the emergency braking probability is less than the threshold e, it is considered that a possibility of performing emergency braking by the driver is very small. Then, the braking force can be preferentially provided by the motor braking system, so that kinetic energy of the vehicle can be effectively recovered, and be converted by the motor into electric energy and stored in a battery that supplies energy to the vehicle. When the emergency braking probability is greater than the threshold e, the motor braking force limit is negatively correlated with the emergency braking probability. When the emergency braking probability reaches a threshold f, the motor braking force limit is 0, that is, after the emergency braking probability is greater than the threshold f, the braking force is no longer provided by the motor braking system. The VCU can determine the motor braking force limit corresponding to the emergency braking probability based on the correspondence. Then, the motor braking force can be allocated within the motor braking force limit. To be specific, the motor braking force to be provided by the motor braking system needs to be less than or equal to the determined motor braking force limit. Then, the difference between the total braking force and the motor braking force is determined as the hydraulic braking force.

In a possible implementation, the determining the motor braking force required for braking of the vehicle based on the motor braking force limit corresponding to the emergency braking probability of the vehicle includes: if the motor braking force limit corresponding to the emergency braking probability of the vehicle is greater than maximum motor braking force, determining that the motor braking force required for braking of the vehicle is the motor braking force limit corresponding to the emergency braking probability of the vehicle; if the motor braking force limit corresponding to the emergency braking probability of the vehicle is less than the maximum motor braking force, determining that the motor braking force required for braking of the vehicle is the maximum motor braking force.

In the solution shown in this embodiment of this invention, the foregoing maximum motor braking force is the maximum braking force that the motor braking system can provide. This solution has a small amount of calculation and can more efficiently determine the motor braking force and the hydraulic braking force required for braking of the vehicle.

In a possible implementation, the determining motor braking force and hydraulic braking force required for braking of the vehicle based on the emergency braking probability and the total braking force includes: determining a braking force allocation proportion corresponding to the emergency braking probability of the vehicle based on a correspondence between the emergency braking probability and the braking force allocation proportion; and determining the motor braking force and the hydraulic braking force required for braking of the vehicle based on the braking force allocation proportion corresponding to the emergency braking probability of the vehicle and the total braking force.

In the solution shown in this embodiment of this invention, the braking force allocation proportion may be a ratio of the motor braking force to the hydraulic braking force, that is, (motor braking force/hydraulic braking force). A smaller value of this ratio indicates a larger proportion of the hydraulic braking force in the braking force. The correspondence between the emergency braking probability and the braking force allocation proportion can be prestored. After the emergency braking probability is determined, the braking force allocation proportion corresponding to the emergency braking probability can be determined based on the correspondence between the emergency braking probability and the braking force allocation proportion. This correspondence may be that the emergency braking probability is negatively correlated with the braking force allocation proportion. To be specific, a larger emergency braking probability indicates a larger proportion of the hydraulic braking force in the braking force. When the emergency braking probability reaches the threshold f, the motor braking force that needs to be provided by the motor braking system in the braking force is 0, and all braking force is provided by the hydraulic braking system. After the braking force allocation proportion is determined, the motor braking force to be allocated is determined. If the motor braking force to be allocated is less than the maximum motor braking force that the motor braking system can provide, the motor braking force to be provided by the motor braking system is the motor braking force to be allocated. If the motor braking force to be allocated is greater than the maximum motor braking force that the motor braking system can provide, the motor braking force to be provided by the motor braking system is the maximum motor braking force. Then, from the total braking force, the braking force other than the motor braking force to be provided by the motor braking system is allocated as the hydraulic braking force.

According to a second aspect, an apparatus for controlling vehicle braking is provided. The apparatus includes:

an obtaining module, configured to obtain an emergency braking probability of a vehicle, where the emergency braking probability is used to indicate a possibility of performing braking by the vehicle;
a determining module, configured to determine total braking force required for braking of the vehicle based on a current velocity of the vehicle and a current opening of a brake pedal of the vehicle;
an allocation module, configured to determine motor braking force and hydraulic braking force required for braking of the vehicle based on the emergency braking probability and the total braking force; and
a control module, configured to send a control signal to a motor braking system and a hydraulic braking system of the vehicle based on the motor braking force and the hydraulic braking force, so that the motor braking system provides the motor braking force and the hydraulic braking system provides the hydraulic braking force.

In a possible implementation, the obtaining module is configured to:
determine the emergency braking probability of the vehicle based on a current opening change rate of an accelerator pedal of the vehicle, a current velocity of the vehicle, a current distance between the vehicle and an object ahead, and a current velocity of the object ahead.

According to the second apsect, the obtaining module is configured to:

determine a first emergency braking probability based on the current opening change rate of the accelerator pedal of the vehicle and the current velocity of the vehicle;
determine a second emergency braking probability based on the current velocity of the vehicle, the current distance between the vehicle and the object ahead, and the current velocity of the object ahead; and
determine the emergency braking probability of the vehicle based on the first emergency braking probability and the second emergency braking probability.

In a possible implementation, the obtaining module is configured to:

determine a reference opening change rate corresponding to the current opening change rate of the accelerator pedal of the vehicle and the current velocity of the vehicle based on a prestored correspondence among the velocity of the vehicle, the opening of the accelerator pedal, and a reference opening change rate of the accelerator pedal;
determine a first difference between the current opening change rate of the accelerator pedal and the determined reference opening change rate; and
determine the first emergency braking probability corresponding to the first difference based on a prestored correspondence between the difference and the emergency braking probability.

In a possible implementation, the apparatus further includes:
a correction module, configured to: if the current opening change rate of the accelerator pedal is greater than a first threshold, detect an opening of the brake pedal of the vehicle within preset duration after a current time; if it is detected that a current opening of the brake pedal is greater than a second threshold, and a current opening change rate of the brake pedal is greater than a third threshold, correct the first emergency braking probability to 1; otherwise, correct the first emergency braking probability to 0.

In a possible implementation, the obtaining module is configured to:

determine a target critical deceleration of the vehicle based on the current velocity of the vehicle, the current distance between the vehicle and the object ahead, and the current velocity of the object ahead; and
determine a second emergency braking probability corresponding to the target critical deceleration based on a prestored correspondence between the critical deceleration and the emergency braking probability.

In a possible implementation, the obtaining module is configured to:
determine a larger value of the first emergency braking probability and the second emergency braking probability as the emergency braking probability of the vehicle.

In a possible implementation, the determining module is configured to:

determine a motor braking force limit corresponding to the emergency braking probability of the vehicle based on a prestored correspondence between the emergency braking probability and the motor braking force limit;
determine the motor braking force required for braking of the vehicle based on the motor braking force limit corresponding to the emergency braking probability of the vehicle; and
determine hydraulic braking force required for braking of the vehicle based on a difference between the total braking force and the motor braking force.

In a possible implementation, the determining module is configured to:

if the motor braking force limit corresponding to the emergency braking probability of the vehicle is greater than maximum motor braking force, determine that the motor braking force required for braking of the vehicle is the motor braking force limit corresponding to the emergency braking probability of the vehicle, where the maximum motor braking force is the maximum braking force that the motor braking system of the vehicle can provide; and

if the motor braking force limit corresponding to the emergency braking probability of the vehicle is less than the maximum motor braking force, determine that the motor braking force required for braking of the vehicle is the maximum motor braking force.

In a possible implementation, the determining module is configured to:

determine a braking force allocation proportion corresponding to the emergency braking probability of the vehicle based on a correspondence between the emergency braking probability and the braking force allocation proportion; and
determine the motor braking force and the hydraulic braking force required for braking of the vehicle based on the braking force allocation proportion corresponding to the emergency braking probability of the vehicle and the total braking force.

Beneficial effects of the technical solutions provided in the embodiments of this invention are as follows: The VCU can obtain the emergency braking probability of the vehicle, and the emergency braking probability can reflect the possibility that the driver is to perform emergency braking. The VCU can further determine the braking force required for braking of the vehicle based on the current velocity of the vehicle and the current opening of the brake pedal. Then, the braking force required by the vehicle can be allocated based on the emergency braking probability, and the motor braking force provided by the motor braking system and the hydraulic braking force provided by the hydraulic braking system are determined respectively. Then, the motor braking system and the hydraulic braking system perform control and provide corresponding braking force at the same time to brake the vehicle. In this way, before the driver performs emergency braking, the hydraulic braking system has already begun to provide hydraulic braking force. Then, when the driver performs emergency braking, the hydraulic braking system can provide hydraulic braking force on the basis of the hydraulic braking force at this time, that is, does not need to go through the slow pressure build-up zone. This can effectively shorten the emergency braking time and improve the driving safety of the vehicle.

## BRIEF DESCRIPTION OF DRAWINGS

FIG. 1A is a schematic diagram of a vehicle system according to an example for a better understanding;
FIG. 1B is a schematic diagram of a vehicle control unit according to an example for a better understanding;
FIG. 2 is a flowchart of a method for controlling vehicle braking according to an embodiment of this application;

FIG. 3 is a schematic diagram of a correspondence among a velocity of a vehicle, an opening of an accelerator pedal, and a reference opening change rate of the accelerator pedal according to an example for a better understanding;
FIG. 4A is a schematic diagram of a correspondence between an emergency braking probability and a difference that is obtained by subtracting an opening change rate of an accelerator pedal from a reference opening change rate of the accelerator pedal according to an example for a better understanding;
FIG. 4B is a schematic diagram of a correspondence between an emergency braking probability and a difference that is obtained by subtracting an opening change rate of an accelerator pedal from a reference opening change rate of the accelerator pedal according to an example for a better understanding;
FIG. 5 is a schematic diagram of a correspondence between a critical deceleration and an emergency braking probability according to an example for a better understanding;
FIG. 6 is a schematic diagram of a correspondence between a velocity of a vehicle and coasting feedback force according to an example for a better understanding;
FIG. 7 is a schematic diagram of a correspondence among a velocity of a vehicle, an opening of a brake pedal, and braking force according to an example for a better understanding;
FIG. 8 is a schematic diagram of a correspondence among a velocity of a vehicle, an opening of a brake pedal, and braking force according to an example for a better understanding;
FIG. 9 is a schematic diagram of a correspondence between an emergency braking probability and a motor braking force limit according to an example for a better understanding;
FIG. 10 is a schematic diagram of changes of motor torque, braking force, hydraulic braking force, an opening of a pedal over time according to an example for a better understanding;
FIG. 11 is a schematic diagram of changes of motor torque, braking force, hydraulic braking force, an opening of a pedal over time according to an example for a better understanding; and
FIG. 12 is a schematic structural diagram of an apparatus for controlling vehicle braking according to an embodiment of this invention.

## DESCRIPTION OF EMBODIMENTS

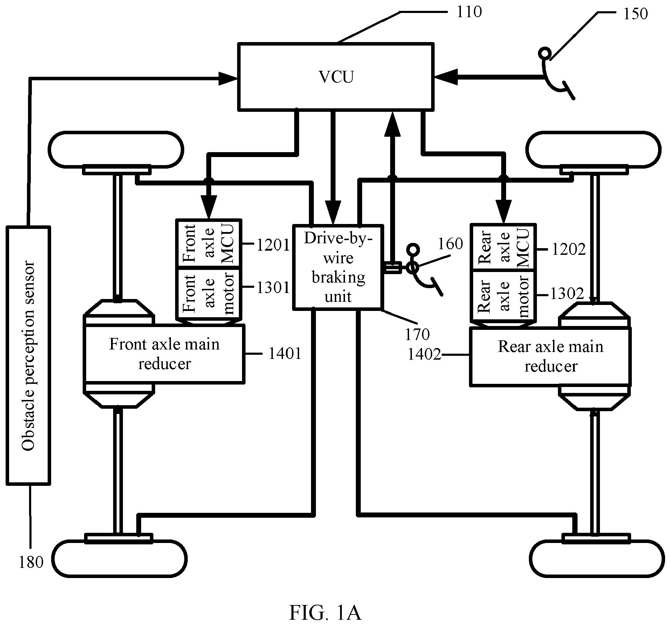

Embodiments of this invention provide a method for controlling vehicle braking. The control method can be applied to a manually driven electric vehicle, or can be applied to an automatically driven electric vehicle. An example in which the control method is applied to a manually driven electric vehicle is used in the following for description. The foregoing method for controlling vehicle braking can be implemented by a VCU in the vehicle, and the VCU may be disposed in a vehicle system of the vehicle. In addition to the VCU, the vehicle control system may further include the following: FIG. 1A is a schematic diagram of a vehicle system according to an example for a better understanding. As shown in FIG. 1A, in addition to the VCU 110, the vehicle system of the vehicle may further include a motor braking system and a hydraulic braking system. The motor braking system is configured to provide motor braking force for the vehicle based on a control signal sent by the VCU 110. The hydraulic braking system is configured to provide hydraulic braking force for the vehicle based on a control signal sent by the VCU. The motor braking system may include a front axle motor control unit (Motor Control Unit, MCU) 1201, a front axle motor 1301, a front axle main reducer 1401, a rear axle MCU 1202, a rear axle motor 1302, and a rear axle main reducer 1402. In the motor braking system, the front axle MCU 1201 is connected to the front axle motor 1301, the rear axle MCU 1202 is connected to the rear axle motor 1302, and the front axle motor 1301 may be connected to the front axle main accelerator 1401 through a coupling. Similarly, the rear axle motor 1302 may be connected to the front axle main accelerator 1402 through a coupling. The hydraulic braking system may include a brake pedal 160 and a drive-by-wire braking unit 170. In addition, the vehicle system may further include an obstacle perception sensor 180 and an accelerator pedal 150. Both the obstacle perception sensor 180 and the accelerator pedal 150 can be connected to the VCU 110, and the obstacle perception sensor 180 is configured to: detect a distance between the vehicle and an object ahead, detect a moving velocity of the object ahead, and send the detected distance between the vehicle and the object ahead, and the detected moving velocity of the object ahead to the VCU 110.

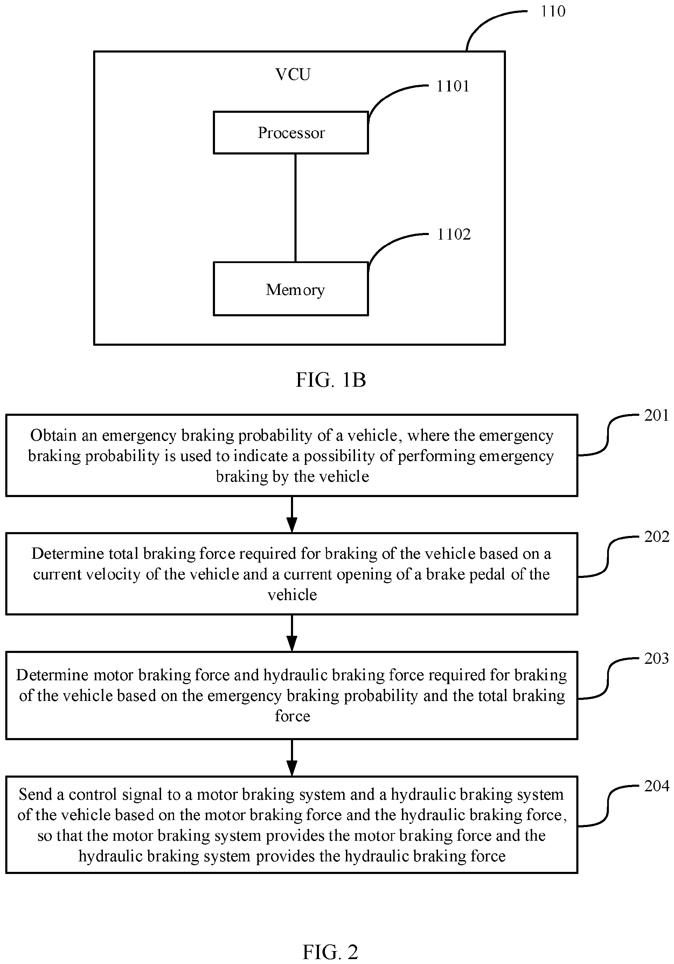

FIG. 1B is a schematic diagram of a VCU 110 according to an example for a better understanding. In FIG. 1B, the VCU may include a processor 1101 and a memory 1102. The processor 1101 may be a CPU. The processor 1101 may be one processor, or may include a plurality of processors. The memory 1102 may include a volatile memory such as a RAM; the memory may include a non-volatile memory such as a ROM or a flash memory; and the memory may further include a combination of the foregoing types of memories. The memory 1102 may be one memory, or may include a plurality of memories. In an implementation, the memory 1102 stores a computer readable instruction, and the computer readable instruction can be executed by the processor 1101 to implement the method for controlling vehicle braking provided in the example for a better understanding.

During implementation, the VCU can obtain signals from the obstacle perception sensor, the accelerator pedal, and the brake pedal. The signals herein are usually controller area network (Controller Area Network, CAN) signals. Then, the processor 1101 can determine an emergency braking probability of the vehicle by executing the computer readable instruction stored in the memory 1102, and then allocate, based on the emergency braking probability, the braking force that is to be used for braking of the vehicle, to obtain motor braking force to be provided by the motor braking system, and hydraulic braking force to be provided by the hydraulic braking system. Then, a CAN signal is used to notify the MCU of the motor braking force required for braking of the vehicle, and at the same time, a CAN signal is also used to notify the drive-by-wire braking unit of the hydraulic braking force required for braking of the vehicle. After learning the motor braking force required for braking of the vehicle, the MCU controls the front axle motor and the rear axle motor to separately generate motor braking torque, and brake the vehicle through the front axle main reducer and the rear axle main reducer, respectively. In addition, after learning the hydraulic braking force required for braking of the vehicle, the drive-by-wire braking unit builds up braking pressure by pressing brake fluid into a wheel cylinder. The built-up braking pressure is the hydraulic braking force and a wheel brake of the wheel is used to brake the vehicle. Through the braking of the motor braking system and the braking of the hydraulic braking system, the vehicle can be decelerated or stopped.

An embodiment of this invention provides a method for controlling vehicle braking. As shown in FIG. 2, a processing procedure of the method may include the following steps.

Step 201: Obtain an emergency braking probability of a vehicle.

The emergency braking probability is used to indicate a possibility of performing emergency braking by the vehicle. During implementation, the VCU can determine the emergency braking probability of the vehicle based on surrounding information of the vehicle and the like.

In a possible implementation, when the emergency braking probability is determined, the surrounding information of the vehicle and the driver's operation on a pedal of the vehicle may be comprehensively considered. Correspondingly, the processing in step 201 may be as follows: determine the emergency braking probability of the vehicle based on a current opening change rate of the accelerator pedal of the vehicle, a current velocity of the vehicle, a current distance between the vehicle and an object ahead, and a current velocity of the object ahead.

The opening of the accelerator pedal may be a ratio of an included angle between a current position of the accelerator pedal and an initial position of the accelerator pedal without external force to a maximum angle that the accelerator pedal can move. The opening can be generally expressed as a percentage such as 10%. The object ahead may be another vehicle driving in front of the vehicle, a pedestrian, an animal, or a still object such as a tree.

During implementation, an opening sensor may be installed on the accelerator pedal of the vehicle, and the opening sensor can periodically detect an opening of the accelerator pedal. The period is a very short period, such as a few milliseconds or even less. The detected opening of the accelerator pedal is sent to the VCU, and the VCU obtains the opening of the accelerator pedal, and calculates a derivative of the opening of the accelerator pedal to obtain a current opening change rate (which can also be referred to as a current rate of the accelerator pedal) of the accelerator pedal. The obstacle perception sensor installed in the vehicle can detect the distance between the vehicle and the object ahead and a current moving velocity of the object ahead, and can send the detected distance between the vehicle and the object ahead and the current moving velocity of the object ahead to the VCU. In addition, the VCU can obtain the current velocity of the vehicle. The VCU can determine the emergency braking probability of the vehicle comprehensively based on the current opening change rate of the accelerator pedal of the vehicle, the current velocity of the vehicle, the current distance between the vehicle and the object ahead, and the current velocity of the object ahead that are obtained above.

In a possible implementation, the VCU can determine the corresponding emergency braking probabilities based on information from different sources, and then determine the emergency braking probability of the vehicle comprehensively based on the plurality of emergency braking probabilities obtained. The processing in step 201 is as follows: determine a first emergency braking probability based on the current opening change rate of the accelerator pedal of the vehicle and the current velocity of the vehicle; determine a second emergency braking probability based on the current velocity of the vehicle, the current distance between the vehicle and the object ahead, and the current velocity of the object ahead; and determine the emergency braking probability of the vehicle based on the first emergency braking probability and the second emergency braking probability.

During implementation, when determining the first emergency braking probability, the VCU can determine a reference opening change rate corresponding to the current velocity of the vehicle and the current opening of the accelerator pedal based on a prestored correspondence among the velocity of the vehicle, the opening of the accelerator pedal, and a reference opening change rate of the accelerator pedal. Then, a first difference between the current opening change rate and the determined reference opening change rate is calculated. Then, the first emergency braking probability corresponding to the first difference can be determined based on a prestored correspondence between the difference and the emergency braking probability.

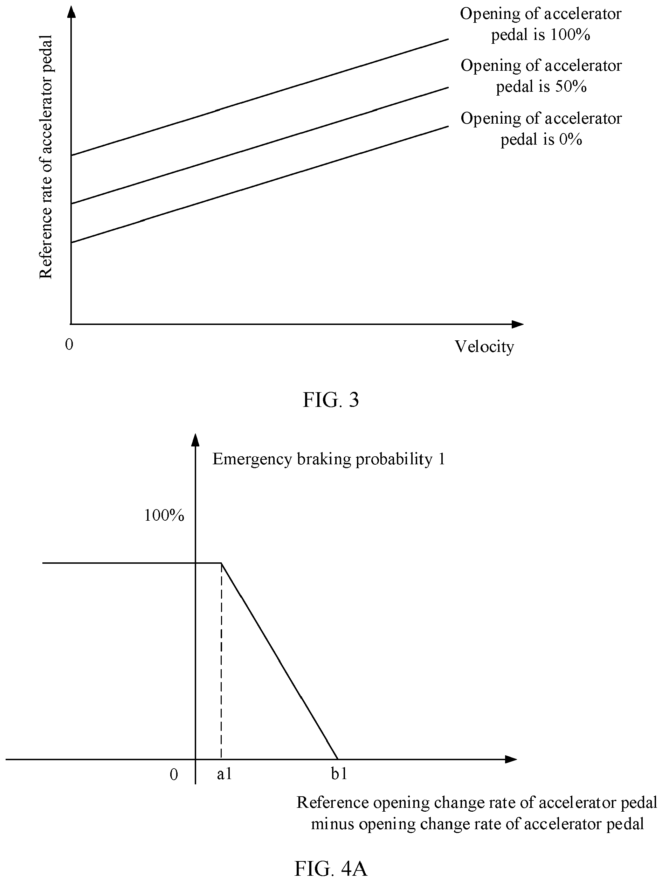

The foregoing prestored correspondence among the velocity of the vehicle, the opening of the accelerator pedal, and the reference opening change rate of the accelerator pedal may be shown in FIG. 3. When the velocity of the vehicle is constant, the reference opening change rate of the accelerator pedal is positively correlated with the opening of the accelerator pedal; when the opening of the accelerator pedal is constant, the reference opening change rate of the accelerator pedal is positively correlated with the velocity of the vehicle. It should be noted that the correspondence shown in FIG. 3 is merely an example description of the relationship among the three. In actual application, the correspondence among the three may also be stored in another manner, for example, a correspondence table, or an expression with the reference opening change rate of the accelerator pedal as a dependent variable, and with the velocity of the vehicle and the opening of the accelerator pedal as independent variables. To make the correspondence among the three more accurate, a technician can establish the correspondence among the three based on tens of thousands, hundreds of thousands or even more sets of reference data collected in actual driving.

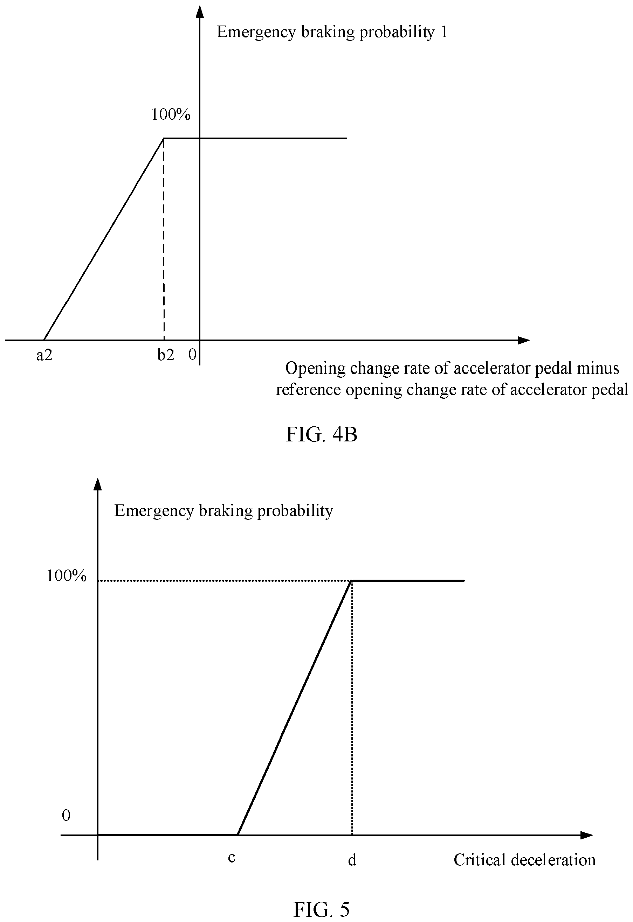

The foregoing prestored correspondence between the emergency braking probability and the difference between the opening change rate of the accelerator pedal and the reference opening change rate of the accelerator pedal may be shown in FIG. 4A. FIG. 4A shows the correspondence between the emergency braking probability and a difference that is obtained by subtracting the opening change rate of the accelerator pedal from the reference opening change rate of the accelerator pedal. When the difference is less than a threshold a1, the emergency braking probability is 100%. When the difference is greater than the threshold a1 and less than a threshold b 1, the difference is negatively correlated with the emergency braking probability. When the difference is greater than or equal to the threshold b 1, the emergency braking probability is 0. In addition, the correspondence between the emergency braking probability and the difference between the opening change rate of the accelerator pedal and the reference opening change rate of the accelerator pedal may also be shown in FIG. 4B. FIG. 4B shows the correspondence between the emergency braking probability and a difference that is obtained by subtracting the reference opening change rate of the accelerator pedal from the opening change rate of the accelerator pedal. When the difference is less than a threshold a2, the emergency braking probability is 0. When the difference is greater than the threshold a2 and less than a threshold b2, the emergency braking probability is positively correlated with the difference. When the difference is greater than or equal to b2, the emergency braking probability is 100% (which can also be expressed as 1). It should be noted that the correspondences shown in FIG. 4A and FIG. 4B are merely example descriptions of the relationship between the two. In actual application, the correspondence between the two may also be stored in another manner, for example, a correspondence table, or an expression with the difference as an independent variable and with the emergency braking probability as a dependent variable.

When determining the second emergency braking probability, the VCU can determine a target critical deceleration of the vehicle based on the current velocity of the vehicle, the current distance between the vehicle and the object ahead, and the current velocity of the object ahead. A second emergency braking probability corresponding to the target critical deceleration is determined based on a correspondence between the critical deceleration and the emergency braking probability. The target critical deceleration is the minimum deceleration on an assumption that the velocity of the vehicle is greater than the moving velocity of the object ahead and the object ahead uniformly travels at the current moving velocity, and the vehicle starts to decelerate at this time so that a distance between the vehicle and the object ahead is 0 when the vehicle and the object ahead have the same velocity.

When determining the target critical velocity of the vehicle, the VCU can substitute the current velocity of the vehicle, the current distance between the vehicle and the object ahead, and the current velocity of the object ahead that are obtained into the following formula 1.

$$\text{Formula 1: } a\_edge = (v - v\_obs)^2/(2 * L),$$

where a_edge represents the critical deceleration, v represents the current velocity of the vehicle, v_obs represents the current velocity of the object ahead, and L represents the current distance between the vehicle and the object ahead.

Then, the emergency braking probability corresponding to the target critical deceleration, that is, the second emergency braking probability, can be obtained based on a prestored correspondence between the critical deceleration and the emergency braking probability. Herein, the prestored correspondence between the critical deceleration and the emergency braking probability may be shown in FIG. 5. When the critical deceleration is less than a threshold c, the emergency braking probability can be 0. When the critical deceleration is greater than or equal to the threshold c and less than a threshold d, the emergency braking probability is positively correlated with the critical deceleration. When the critical deceleration is greater than or equal to the threshold d, the emergency braking probability is 100%. It should be noted that the correspondence shown in FIG. 5 is merely an example description of the relationship between the two. In actual application, the correspondence between the two may also be stored in another manner, for example, a correspondence table, or a piecewise function between the emergency braking probability and the critical deceleration.

After the first emergency braking probability and the second emergency braking probability are determined, the emergency braking probability of the vehicle can be determined jointly based on the two. For example, a larger value of the first emergency braking probability and the second emergency braking probability may be determined as the emergency braking probability of the vehicle.

In a possible implementation, after the determining a first emergency braking probability based on the current opening change rate of the accelerator pedal and the current velocity of the vehicle, the first emergency braking probability can be further corrected based on the driver's operation on the brake pedal. Correspondingly, the processing may be as follows: if the current opening change rate of the accelerator pedal is greater than a first threshold, detect an opening of the brake pedal within preset duration after a current time; if it is detected that a current opening of the brake pedal is greater than the second threshold, and a current opening change rate of the brake pedal is greater than a third threshold, correct the first emergency braking probability to 1; otherwise, correct the first emergency braking probability to 0.

During implementation, after the VCU determines the first emergency braking probability, if the VCU determines that the current opening change rate of the accelerator pedal is greater than the first threshold, it indicates that the driver has quickly lifted the accelerator pedal. Then, the opening of the brake pedal within the preset duration can be detected. If it is detected that the current opening of the brake pedal is greater than a second threshold and the current opening change rate of the brake pedal is greater than a third threshold, it indicates that the driver quickly depresses the brake pedal immediately after quickly lifting the accelerator pedal. It can be considered that the driver is very likely to perform emergency braking, and in this case, the first emergency braking probability can be corrected to 1. If it is not detected within the preset duration that the current opening of the brake pedal is greater than the second threshold and the current opening change rate of the brake pedal is greater than the third threshold, it indicates that the driver does not depress the brake pedal quickly after quickly lifting the accelerator pedal. It can be considered that the driver does not need to perform emergency braking, and quickly lifting the accelerator pedal may be just a driving habit of the driver. In this case, the first emergency braking probability can be corrected to 0.

Correspondingly, if the first emergency braking probability is corrected through the foregoing processing, when the emergency braking probability of the vehicle is determined based on the first emergency braking probability and the second emergency braking probability, the used first emergency braking probability is the corrected first emergency braking probability.

Step 202: Determine the total braking force required for braking of the vehicle based on the current velocity of the vehicle and the current opening of the brake pedal of the vehicle.

The braking force may be the braking force of the vehicle when the opening of the accelerator pedal and the opening of the brake pedal are both 0 (that is, neither the accelerator pedal nor the brake pedal is depressed). This braking force is generally referred to as the coasting feedback force. The braking force may also be the braking force of the vehicle when there is an opening for the brake pedal (that is, when the brake pedal is depressed).

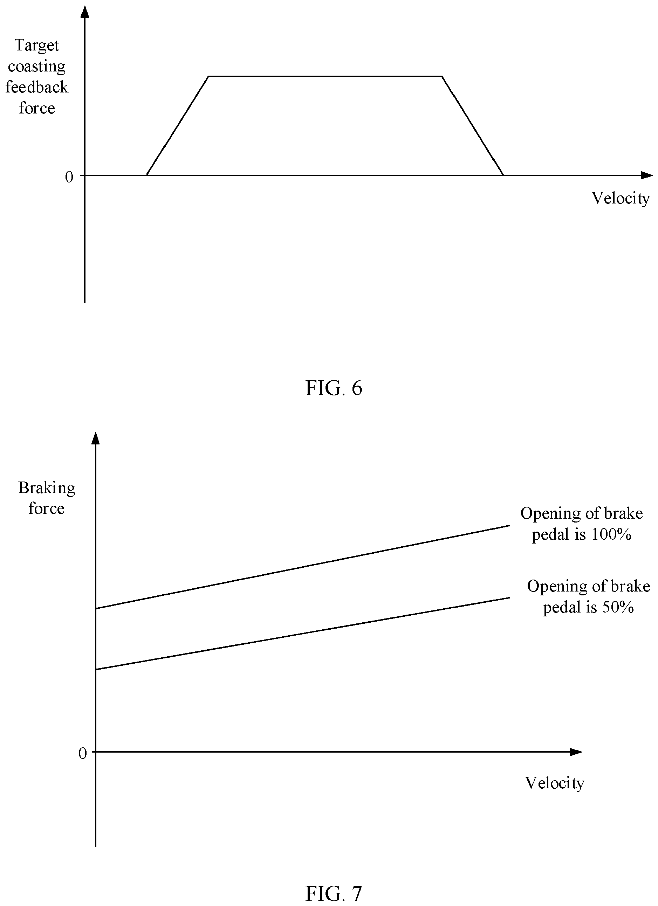

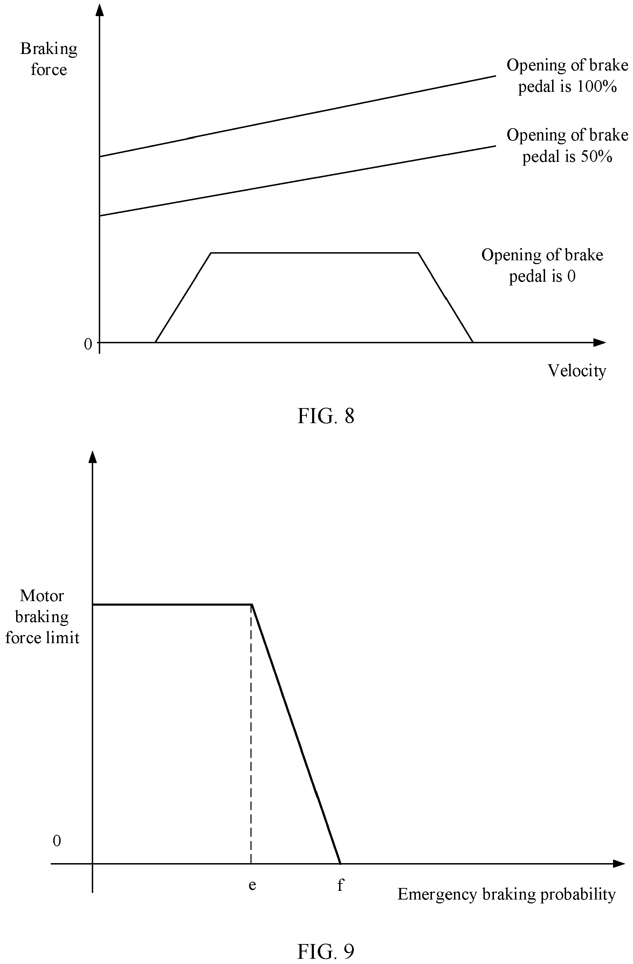

During implementation, if the opening of the brake pedal of the vehicle is 0, coasting feedback force corresponding to the current velocity of the vehicle is determined based on the correspondence between the velocity of the vehicle and the coasting feedback force. The correspondence between the velocity of the vehicle and the coasting feedback force may be shown in FIG. 6. If the opening of the brake pedal of the vehicle is not 0, the braking force corresponding to the current velocity of the vehicle and the current opening of the brake pedal is determined based on a correspondence among the velocity of the vehicle, the opening of the brake pedal, and the braking force. The correspondence among the velocity of the vehicle, the opening of the brake pedal, and the braking force may be shown in FIG. 7. Certainly, the foregoing correspondences in FIG. 6 and FIG. 7 can be combined into the correspondence among the velocity of the vehicle, the opening of the brake pedal, and the braking force described in FIG. 8. In FIG. 8, the coasting feedback force is also collectively referred to as braking force. Based on the correspondence among the velocity of the vehicle, the opening of the brake pedal, and the braking force shown in FIG. 8, the braking force corresponding to the current velocity of the vehicle and the current opening of the brake pedal can be directly determined without determining whether the opening of the brake pedal of the vehicle is 0.

Step 203: Determine motor braking force and hydraulic braking force required for braking of the vehicle based on the emergency braking probability and the total braking force of the vehicle.

During implementation, after the total braking force required for braking of the vehicle is determined, the braking force can be allocated based on the emergency braking probability, and the motor braking force that needs to be provided by the motor braking system and the hydraulic braking force that needs to be provided by the hydraulic braking system are respectively determined from the total braking force.

In a possible implementation, the motor braking force may be determined first, and the part of the total braking force except the motor braking force is provided by the hydraulic braking system. Correspondingly, the processing in step 203 may be as follows: determine a motor braking force limit corresponding to the emergency braking probability of the vehicle based on a prestored correspondence between the emergency braking probability and the motor braking force limit; determine the motor braking force required for braking of the vehicle based on the motor braking force limit corresponding to the emergency braking probability of the vehicle; and determine hydraulic braking force required for braking of the vehicle based on a difference between the total braking force and the motor braking force. During implementation, the corresponding motor braking force limit can be determined from the correspondence between the emergency braking probability and the motor braking force limit based on the foregoing determined emergency braking probability of the vehicle. The correspondence between the emergency braking probability and the motor braking force limit may be shown in FIG. 9. In the correspondence shown in FIG. 9, when the emergency braking probability is greater than 0 and less than a threshold e, the motor braking force limit is unchanged and may be relatively large, for example, may be equal to maximum motor braking force that the motor braking system can provide. In this way, when the emergency braking probability is less than the threshold e, it is considered that a possibility of performing emergency braking by the driver is very small. Then, the braking force can be preferentially provided by the motor braking system, so that kinetic energy of the vehicle can be effectively recovered, and be converted by the motor into electric energy and stored in a battery that supplies energy to the vehicle. When the emergency braking probability is greater than the threshold e, the motor braking force limit is negatively correlated with the emergency braking probability. When the emergency braking probability reaches a threshold f, the motor braking force limit is 0, that is, after the emergency braking probability is greater than the threshold f, it can be considered that the possibility of performing emergency braking by the vehicle is very large. In this case, the braking force is no longer provided by the motor braking system, and is all provided by the hydraulic braking force. After the motor braking force limit is determined, if the motor braking force limit corresponding to the emergency braking probability of the vehicle is greater than the maximum motor braking force that the motor braking system can provide, the motor braking force is determined to be the motor braking force limit corresponding to the emergency braking probability of the vehicle. If the motor braking force limit corresponding to the emergency braking probability of the vehicle is less than the maximum motor braking force, the motor braking force is determined to be the maximum motor braking force. Then, the part obtained by subtracting the motor braking force from the total braking force can be allocated as hydraulic braking force.

In another possible implementation, a correspondence between the emergency braking probability and the braking force allocation proportion may be prestored, and the braking force is allocated based on the correspondence. Correspondingly, the processing in step 203 may be as follows: determine a braking force allocation proportion corresponding to the emergency braking probability of the vehicle based on a correspondence between the emergency braking probability and the braking force allocation proportion; and determine the motor braking force and the hydraulic braking force required for braking of the vehicle based on the braking force allocation proportion corresponding to the emergency braking probability of the vehicle and the total braking force.

The braking force allocation proportion may be a ratio of the motor braking force to the hydraulic braking force, that is, (motor braking force/hydraulic braking force). A smaller value of this ratio indicates a larger proportion of the hydraulic braking force in the total braking force.

During implementation, after the emergency braking probability is determined, the total braking force allocation proportion corresponding to the emergency braking probability can be determined based on the correspondence between the emergency braking probability and the braking force allocation proportion. The correspondence between the emergency braking probability and the braking force allocation proportion may be that the emergency braking probability is negatively correlated with the braking force allocation proportion. To be specific, a larger emergency braking probability indicates a larger proportion of the hydraulic braking force in the braking force. When the emergency braking probability reaches the threshold f, the motor braking force that needs to be provided by the motor braking system in the braking force is 0, and all braking force is provided by the hydraulic braking system. After the braking force allocation proportion is determined, the motor braking force to be allocated is determined. If the motor braking force to be allocated is less than the maximum motor braking force that the motor braking system can provide, the motor braking force to be provided by the motor braking system is the motor braking force to be allocated. If the motor braking force to be allocated is greater than the maximum motor braking force that the motor braking system can provide, the motor braking force to be provided by the motor braking system is the maximum motor braking force. Then, from the total braking force, the braking force other than the motor braking force to be provided by the motor braking system is allocated as the hydraulic braking force.

Step 204: Send a control signal to the motor braking system and the hydraulic braking system of the vehicle based on the motor braking force and the hydraulic braking force, so that the motor braking system provides the motor braking force and the hydraulic braking system provides the hydraulic braking force.

During implementation, the motor braking force is usually expressed in the form of motor braking torque, and the VCU can determine the motor braking torque, and notify the motor braking system of the motor braking torque through a control signal. In addition, the VCU can further notify the hydraulic braking system of the hydraulic braking force through a control signal. The control signal may be a CAN signal. After receiving the control signal, the motor braking system and the hydraulic braking system respectively generate the motor braking force and the hydraulic braking force to brake the vehicle so that the vehicle speeds down.

The following describes beneficial effects of the embodiments of this invention with reference to several possible scenarios.

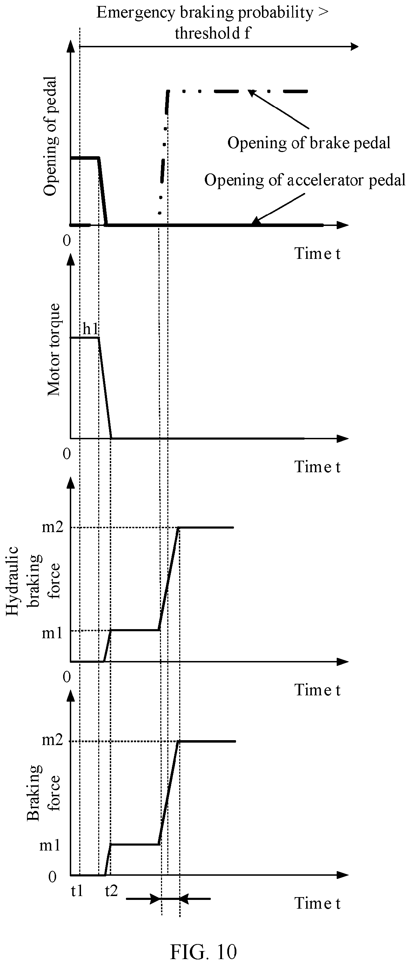

Case 1: As shown in FIG. 10, between 0 and a time t1, the opening of the brake pedal is 0, the opening of the accelerator pedal opening is not 0, and the motor torque is a positive value h1 (if the motor torque is a positive value, it indicates that the motor provides driving force; if the motor torque is a negative value, it indicates that the motor provides braking force). At the time 11, the VCU learns, through calculation based on step 201, that the emergency braking probability is greater than the threshold f shown in FIG. 9, and the emergency braking probability remains in a state greater than the threshold f after the time 11. Then, the driver quickly lifts the accelerator pedal, the opening of the accelerator pedal decreases, and the motor torque also decreases with the decrease of the opening of the accelerator pedal. At a time t2, the motor torque decreases to 0, and the opening of the accelerator pedal decreases to 0 within a very short time before the motor torque decreases to 0. When the opening of the accelerator pedal is 0, the VCU calculates the total braking force required for braking of the vehicle based on step 202. Because the emergency braking probability is greater than the threshold f, the total braking force is all provided by the hydraulic braking system. The hydraulic braking force also starts to increase when the opening of the accelerator pedal is 0, and the total braking force reaches m1 at the time t2. After that, the driver discovers an emergency situation and quickly depresses the brake pedal. The opening of the brake pedal increases, and reaches n at a time t3. As the driver depresses the brake pedal, the VCU learns, through calculation based on step 202, that the total braking force required for braking of the vehicle also increases, and reaches m2 at the time t3. Because the emergency braking probability is greater than the threshold f, the total braking force is all provided by the hydraulic braking system. Because the hydraulic braking force has reached m1 at the time t2, after the driver depresses the brake pedal, the hydraulic braking force quickly increases directly from m1 to m2, without a need to go through the process of starting to increase slowly. This can effectively shorten the time taken for the hydraulic braking force to reach the required braking force, and improve driving safety.

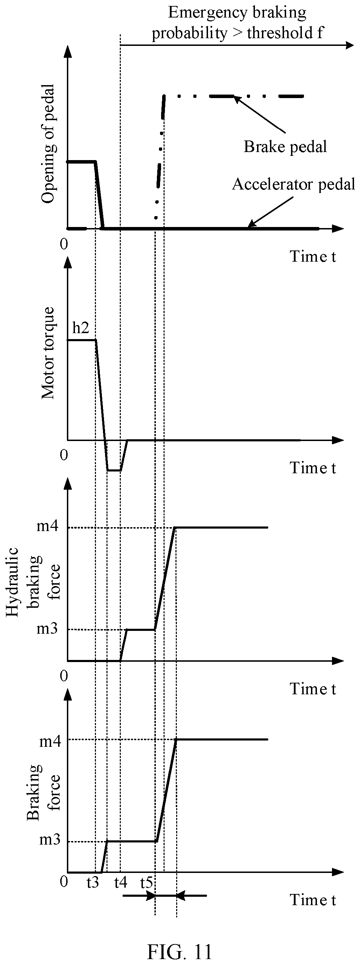

Case 2: As shown in FIG. 11, between 0 and a time t1, the opening of the brake pedal is 0, the opening of the accelerator pedal opening is not 0, and the motor torque is a positive value h2. At a time t3, the driver lifts the accelerator pedal and the opening of the accelerator pedal decreases to 0. As the opening of the accelerator pedal decreases, the motor torque also decreases accordingly. After the opening of the brake pedal decreases to 0, the motor torque also decreases to 0 accordingly. In this case, the opening of the accelerator pedal and the opening of the brake pedal are both 0, and the VCU calculates the emergency braking probability based on step 201. This emergency braking probability is very small. After the VCU calculates, based on step 202, the total braking force m3 required by the vehicle, because the emergency braking probability is very small, the VCU learns, through calculation based on step 203, that the braking force can be all provided by the motor braking system. In this case, the motor torque starts to be changed to a negative value, that is, the motor starts to provide motor braking force and the hydraulic braking force is 0. At a time t4, the VCU learns, through calculation based on step 201, that the emergency braking probability is greater than a threshold f, the total braking force remains unchanged, and the total braking force needs to be provided by the hydraulic braking system. In this case, the motor torque decreases to 0, and the hydraulic braking force increases from 0 to m3. At a time t5, the driver discovers an emergency situation and quickly depresses the brake pedal, and the opening of the brake pedal quickly increases. The VCU calculates, based on step 202, the total braking force m4 required for braking of the vehicle. Because the emergency braking probability is still greater than the threshold f at this time, the braking force m4 is still provided by the hydraulic braking system. Because the hydraulic braking force has reached m3 at the time t4, after the driver depresses the brake pedal, the hydraulic braking force quickly increases directly from m3 to m4, without a need to go through the process of starting to increase slowly. This can effectively shorten the time taken for the hydraulic braking force to reach the required braking force, and improve driving safety.

In addition, when the vehicle performs emergency braking, an antilock brake system (Antilock Brake System, ABS) of the vehicle may be triggered. When the ABS system is executed, the braking force of the vehicle needs to be provided by the hydraulic braking force. In the case of performing emergency braking by the vehicle in the prior art, the total braking force is still provided by the motor braking system first. Then, if the ABS system is triggered, the motor braking force needs to quickly decrease. To ensure that the total braking force is unchanged, an amount of the increase in the hydraulic braking force needs to be the same as an amount of the decrease in the motor braking force, and the change rates need to be the same as far as possible. The ABS system can be executed only when the total braking force is all provided by the hydraulic braking system. To be specific, the hydraulic braking system enters a cyclic process of pressure increase - pressure holding - pressure decrease, to prevent a wheel from being completely locked. However, in practice, it is difficult to synchronize the increase of the hydraulic braking force and the decrease of the motor braking force. Therefore, in this process, the vehicle may experience shock due to unstable braking force. According to the method provided in the embodiments of this invention, when the vehicle performs emergency braking, the total braking force is all provided by the hydraulic braking system. Then, if the ABS system is triggered, the ABS system can be quickly executed, that is, the hydraulic braking system can directly enter a cyclic process of pressure increase - pressure holding - pressure decrease, without a need to coordinate the braking force with the motor braking system. This improves execution efficiency of the ABS system, and at the same time prevents the vehicle from being shocked due to unstable braking force.

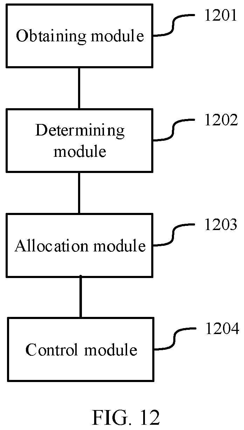

Based on a same technical concept, an embodiment of this invention further provides a control apparatus for vehicle braking. As shown in FIG. 12, the apparatus includes an obtaining module 1201, a determining module 1202, an allocation module 1203, and a control module 1204.

The obtaining module 1201 is configured to obtain an emergency braking probability of a vehicle, where the emergency braking probability is used to indicate a possibility of performing braking by the vehicle. Specifically, the obtaining module 1201 may implement the function of obtaining the emergency braking probability of the vehicle in step 201 and another implicit step.

The determining module 1202 is configured to determine total braking force required for braking of the vehicle based on a current velocity of the vehicle and a current opening of a brake pedal of the vehicle. Specifically, the determining module 1202 may implement the function of determining the braking force in step 202 and another implicit step.

The allocation module 1203 is configured to determine motor braking force and hydraulic braking force required for braking of the vehicle based on the emergency braking probability and the total braking force. Specifically, the allocation module 1203 may implement the function of determining the motor braking force and the hydraulic braking force in step 203 and another implicit step.

The control module 1204 is configured to send a control signal to a motor braking system and a hydraulic braking system of the vehicle based on the motor braking force and the hydraulic braking force, so that the motor braking system provides the motor braking force and the hydraulic braking system provides the hydraulic braking force. Specifically, the control module 1204 may implement the function of controlling the motor braking system and the hydraulic braking system in step 204 and another implicit step.

In a possible implementation, the obtaining module 1201 is configured to:
determine the emergency braking probability of the vehicle based on a current opening change rate of an accelerator pedal of the vehicle, the current velocity of the vehicle, a current distance between the vehicle and an object ahead, and a current velocity of the object ahead.

According to this invention, the obtaining module is configured to:

determine a first emergency braking probability based on the current opening change rate of the accelerator pedal of the vehicle and the current velocity of the vehicle;
determine a second emergency braking probability based on the current velocity of the vehicle, the current distance between the vehicle and the object ahead, and the current velocity of the object ahead; and

determine the emergency braking probability of the vehicle based on the first emergency braking probability and the second emergency braking probability.

In a possible implementation, the obtaining module 1201 is configured to:

determine a reference opening change rate corresponding to the current opening change rate of the accelerator pedal of the vehicle and the current velocity of the vehicle based on a prestored correspondence among the velocity of the vehicle, the opening of the accelerator pedal, and a reference opening change rate of the accelerator pedal;
determine a first difference between the current opening change rate of the accelerator pedal and the determined reference opening change rate; and
determine the first emergency braking probability corresponding to the first difference based on a prestored correspondence between the difference and the emergency braking probability.

In a possible implementation, the apparatus further includes:
a correction module, configured to: if the current opening change rate of the accelerator pedal is greater than a first threshold, detect an opening of the brake pedal of the vehicle within preset duration after a current time; if it is detected that the current opening of the brake pedal is greater than a second threshold, and the current opening change rate of the brake pedal is greater than a third threshold, correct the first emergency braking probability to 1; otherwise, correct the first emergency braking probability to 0.

In a possible implementation, the obtaining module 1201 is configured to:

determine a target critical deceleration of the vehicle based on the current velocity of the vehicle, the current distance between the vehicle and the object ahead, and the current velocity of the object ahead; and
determine the second emergency braking probability corresponding to the target critical deceleration based on a prestored correspondence between a critical deceleration and the emergency braking probability.

In a possible implementation, the obtaining module 1201 is configured to:
determine a larger value between the first emergency braking probability and the second emergency braking probability as the emergency braking probability of the vehicle.

In a possible implementation, the determining module 1202 is configured to:

determine a motor braking force limit corresponding to the emergency braking probability of the vehicle based on a prestored correspondence between the emergency braking probability and the motor braking force limit;
determine the motor braking force required for braking of the vehicle based on the motor braking force limit corresponding to the emergency braking probability of the vehicle; and
determine the hydraulic braking force required for braking of the vehicle based on a difference between the total braking force and the motor braking force.

In a possible implementation, the determining module 1202 is configured to:

if the motor braking force limit corresponding to the emergency braking probability of the vehicle is greater than maximum motor braking force, determine that the motor braking force required for braking of the vehicle is the motor braking force limit corresponding to the emergency braking probability of the vehicle, where the maximum motor braking force is maximum braking force that the motor braking system of the vehicle can provide; and
if the motor braking force limit corresponding to the emergency braking probability of the vehicle is less than the maximum motor braking force, determine that the motor braking force required for braking of the vehicle is the maximum motor braking force.

In a possible implementation, the determining module 1202 is configured to:

determine a braking force allocation proportion corresponding to the emergency braking probability of the vehicle based on a correspondence between the emergency braking probability and the braking force allocation proportion; and
determine the motor braking force and the hydraulic braking force required for braking of the vehicle based on the braking force allocation proportion corresponding to the emergency braking probability of the vehicle and the total braking force.

It should be noted that the obtaining module 1201, the determining module 1202, the allocation module 1203, and the control module 1204 may be implemented by a processor, implemented by a processor together with a memory, or implemented by a processor by executing a program instruction in a memory.
It should be further noted that when the control apparatus for vehicle braking provided by the foregoing embodiments performs vehicle braking, division into the foregoing functional modules is used as an example for illustration. In actual application, the foregoing functions can be allocated to different functional modules and implemented according to a requirement, that is, an inner structure of an apparatus is divided into different functional modules to implement all or part of the functions described above. In addition, the control apparatus for vehicle braking provided in the foregoing embodiment and the embodiment of the control method for vehicle braking belong to a same concept. For a specific implementation process of the apparatus, refer to the method embodiment. Details are not described herein again.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on the computer, the procedure or functions according to the foregoing embodiments of this invention are all or partially generated. The computer instructions may be stored in a computer-readable storage medium. The computer-readable storage medium may be any usable medium accessible by a device, or a data storage device, such as a server or a data center, integrating one or more usable media. The usable medium may be a magnetic medium (for example, a floppy disk, a hard disk, a magnetic tape, or the like), an optical medium (for example, a digital video disk (Digital Video Disk, DVD), or the like), a semiconductor medium (for example, a solid-state drive, or the like).

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

**Claims**

1. A control method for vehicle braking, wherein the control method comprises:

   obtaining (201) an emergency braking probability of a vehicle, wherein the emergency braking probability is used to indicate a possibility of performing emergency braking by the vehicle;
   determining (202) total braking force required for braking of the vehicle based on a current velocity of the vehicle and a current opening of a brake pedal of the vehicle;
   determining (203) motor braking force and hydraulic braking force required for braking of the vehicle based on the emergency braking probability and the total braking force; and

sending (204) a control signal to a motor braking system and a hydraulic braking system of the vehicle based on the motor braking force and the hydraulic braking force, so that the motor braking system provides the motor braking force and the hydraulic braking system provides the hydraulic braking force
wherein the obtaining (201) an emergency braking probability of a vehicle comprises:

   determining a first emergency braking probability based on the current opening change rate of the accelerator pedal of the vehicle and the current velocity of the vehicle;
   determining a second emergency braking probability based on the current velocity of the vehicle, the current distance between the vehicle and an object ahead, and the current velocity of the object ahead; and
   determining the emergency braking probability of the vehicle based on the first emergency braking probability and the second emergency braking probability.

2. The method according to claim 1, wherein the determining a first emergency braking probability based on the current opening change rate of the accelerator pedal of the vehicle and the current velocity of the vehicle comprises:

   determining a reference opening change rate corresponding to the current opening change rate of the accelerator pedal of the vehicle and the current velocity of the vehicle based on a prestored correspondence among the velocity of the vehicle, the opening of the accelerator pedal, and a reference opening change rate of the accelerator pedal;
   determining a first difference between the current opening change rate of the accelerator pedal and the determined reference opening change rate; and
   determining the first emergency braking probability corresponding to the first difference based on a prestored correspondence between the difference and the emergency braking probability.

3. The method according to claim 1, wherein after the determining a first emergency braking probability, the method further comprises:
if the current opening change rate of the accelerator pedal is greater than a first threshold, detecting an opening of the brake pedal of the vehicle within preset duration after a current time; if it is detected that the current opening of the brake pedal is greater than a second threshold, and the current opening change rate of the brake pedal is greater than a third threshold, correcting the first emergency braking probability to 1; otherwise, correcting the first emergency braking probability to 0.

4. The method according to claim 1, wherein the determining a second emergency braking probability based on the current velocity of the vehicle, the current distance between the vehicle and the object ahead, and the current velocity of the object ahead comprises:

> determining a target critical deceleration of the vehicle based on the current velocity of the vehicle, the current distance between the vehicle and the object ahead, and the current velocity of the object ahead; and
> determining the second emergency braking probability corresponding to the target critical deceleration based on a prestored correspondence between a critical deceleration and the emergency braking probability.

5. The method according to any one of claims 1 to 4, wherein the determining (203) motor braking force and hydraulic braking force required for braking of the vehicle based on the emergency braking probability and the total braking force comprises:

> determining a motor braking force limit corresponding to the emergency braking probability of the vehicle based on a prestored correspondence between the emergency braking probability and the motor braking force limit;
> determining the motor braking force required for braking of the vehicle based on the motor braking force limit corresponding to the emergency braking probability of the vehicle; and
> determining the hydraulic braking force required for braking of the vehicle based on a difference between the total braking force and the motor braking force.

6. The method according to claim 5, wherein the determining the motor braking force required for braking of the vehicle based on the motor braking force limit corresponding to the emergency braking probability of the vehicle comprises:

> if the motor braking force limit corresponding to the emergency braking probability of the vehicle is greater than maximum motor braking force, determining that the motor braking force required for braking of the vehicle is the motor braking force limit corresponding to the emergency braking probability of the vehicle, wherein the maximum motor braking force is maximum braking force that the motor braking system of the vehicle can provide; and
> if the motor braking force limit corresponding to the emergency braking probability of the vehicle is less than the maximum motor braking force, determining that the motor braking force required for braking of the vehicle is the maximum motor braking force.

7. The method according to any one of claims 1 to 4, wherein the determining (203) motor braking force and hydraulic braking force required for braking of the vehicle based on the emergency braking probability and the total braking force comprises:

> determining a braking force allocation proportion corresponding to the emergency braking probability of the vehicle based on a correspondence between the emergency braking probability and the braking force allocation proportion; and
> determining the motor braking force and the hydraulic braking force required for braking of the vehicle based on the braking force allocation proportion corresponding to the emergency braking probability of the vehicle and the total braking force.

8. A control apparatus for vehicle braking, wherein the control apparatus comprises:

> an obtaining module (1201), configured to obtain an emergency braking probability of a vehicle, wherein the emergency braking probability is used to indicate a possibility of performing braking by the vehicle;
> a determining module (1202), configured to determine total braking force required for braking of the vehicle based on a current velocity of the vehicle and a current opening of a brake pedal of the vehicle;
> an allocation module (1203), configured to determine motor braking force and hydraulic braking force required for braking of the vehicle based on the emergency braking probability and the total braking force; and
> a control module (1204), configured to send a control signal to a motor braking system and a hydraulic braking system of the vehicle based on the motor braking force and the hydraulic braking force, so that the motor braking system provides the motor braking force and the hydraulic braking system provides the hydraulic braking force;
> wherein the obtaining module (1201) is configured to:

>> determine a first emergency braking probability based on the current opening change rate of the accelerator pedal of the vehicle and the current velocity of the vehicle;

determine a second emergency braking probability based on the current velocity of the vehicle, the current distance between the vehicle and an object ahead, and the current velocity of the object ahead; and determine the emergency braking probability of the vehicle based on the first emergency braking probability and the second emergency braking probability.

9. The control apparatus according to claim 8, wherein the obtaining module (1201) is configured to:

   determine a reference opening change rate corresponding to the current opening change rate of the accelerator pedal of the vehicle and the current velocity of the vehicle based on a prestored correspondence among the velocity of the vehicle, the opening of the accelerator pedal, and a reference opening change rate of the accelerator pedal;
   determine a first difference between the current opening change rate of the accelerator pedal and the determined reference opening change rate; and
   determine the first emergency braking probability corresponding to the first difference based on a prestored correspondence between the difference and the emergency braking probability.

10. The control apparatus according to claim 8, wherein the obtaining module (1201) is configured to:

    determine a target critical deceleration of the vehicle based on the current velocity of the vehicle, the current distance between the vehicle and the object ahead, and the current velocity of the object ahead; and
    determine the second emergency braking probability corresponding to the target critical deceleration based on a prestored correspondence between a critical deceleration and the emergency braking probability.

11. The control apparatus according to any one of claims 8 to 10, wherein the determining module (1202) is configured to:

    determine a motor braking force limit corresponding to the emergency braking probability of the vehicle based on a prestored correspondence between the emergency braking probability and the motor braking force limit;
    determine the motor braking force required for braking of the vehicle based on the motor braking force limit corresponding to the emergency braking probability of the vehicle; and
    determine the hydraulic braking force required for braking of the vehicle based on a difference between the total braking force and the motor braking force.

12. The control apparatus according to claim 11, wherein the determining module (1202) is configured to:

    if the motor braking force limit corresponding to the emergency braking probability of the vehicle is greater than maximum motor braking force, determine that the motor braking force required for braking of the vehicle is the motor braking force limit corresponding to the emergency braking probability of the vehicle, wherein the maximum motor braking force is maximum braking force that the motor braking system of the vehicle can provide; and
    if the motor braking force limit corresponding to the emergency braking probability of the vehicle is less than the maximum motor braking force, determine that the motor braking force required for braking of the vehicle is the maximum motor braking force.

13. The control apparatus according to any one of claims 8 to 10, wherein the determining module (1202) is configured to:

    determine a braking force allocation proportion corresponding to the emergency braking probability of the vehicle based on a correspondence between the emergency braking probability and the braking force allocation proportion; and
    determine the motor braking force and the hydraulic braking force required for braking of the vehicle based on the braking force allocation proportion corresponding to the emergency braking probability of the vehicle and the total braking force.

**Patentansprüche**

1. Steuerverfahren für eine Fahrzeugbremsung, wobei das Steuerverfahren Folgendes umfasst:

   Erhalten (201) einer Notbremswahrscheinlichkeit eines Fahrzeugs, wobei die Notbremswahrscheinlichkeit verwendet wird, um eine Möglichkeit des Durchführens einer Notbremsung durch das Fahrzeug anzuzeigen;
   Bestimmen (202) einer Gesamtbremskraft, die auf Basis einer aktuellen Geschwindigkeit des Fahrzeugs und einer aktuellen Öffnung eines Bremspedals des Fahrzeugs zum Bremsen des Fahrzeugs erforderlich ist,
   Bestimmen (203) einer Motorbremskraft und einer hydraulischen Bremskraft, die auf Basis der Notbremswahrscheinlichkeit und der Gesamtbremskraft zum Bremsen des Fahrzeugs erforderlich sind, und

Senden (204) eines Steuersignals an ein Motorbremssystem und ein hydraulisches Bremssystem des Fahrzeugs auf Basis der Motorbremskraft und der hydraulischen Bremskraft, derart, dass das Motorbremssystem die Motorbremskraft und das hydraulische Bremssystem die hydraulische Bremskraft bereitstellt,

wobei das Erhalten (201) einer Notbremswahrscheinlichkeit eines Fahrzeugs Folgendes umfasst:

Bestimmen einer ersten Notbremswahrscheinlichkeit auf Basis der aktuellen Öffnungsänderungsrate des Gaspedals des Fahrzeugs und der aktuellen Geschwindigkeit des Fahrzeugs,

Bestimmen einer zweiten Notbremswahrscheinlichkeit auf Basis der aktuellen Geschwindigkeit des Fahrzeugs, des aktuellen Abstands zwischen dem Fahrzeug und einem davor befindlichen Objekt und der aktuellen Geschwindigkeit des davor befindlichen Objekts und

Bestimmen der Notbremswahrscheinlichkeit des Fahrzeugs auf Basis der ersten Notbremswahrscheinlichkeit und der zweiten Notbremswahrscheinlichkeit.

2. Verfahren nach Anspruch 1, wobei das Bestimmen einer ersten Notbremswahrscheinlichkeit auf Basis der aktuellen Öffnungsänderungsrate des Gaspedals des Fahrzeugs und der aktuellen Geschwindigkeit des Fahrzeugs Folgendes umfasst:

Bestimmen einer Referenzöffnungsänderungsrate, die der aktuellen Öffnungsänderungsrate des Gaspedals des Fahrzeugs und der aktuellen Geschwindigkeit des Fahrzeugs entspricht, auf Basis einer vorab gespeicherten Entsprechung der Geschwindigkeit des Fahrzeugs, der Öffnung des Gaspedals und einer Referenzöffnungsänderungsrate des Gaspedals;

Bestimmen einer ersten Differenz zwischen der aktuellen Öffnungsänderungsrate des Gaspedals und der bestimmten Referenzöffnungsänderungsrate und

Bestimmen der ersten Notbremswahrscheinlichkeit, die der ersten Differenz entspricht, auf Basis einer vorab gespeicherten Entsprechung zwischen der Differenz und der Notbremswahrscheinlichkeit.

3. Verfahren nach Anspruch 1, wobei das Verfahren nach dem Bestimmen einer ersten Notbremswahrscheinlichkeit ferner Folgendes umfasst:

wenn die aktuelle Öffnungsänderungsrate des Gaspedals größer ist als ein erster Schwellwert, Detektieren einer Öffnung des Bremspedals des Fahrzeugs innerhalb einer voreingestellten Dauer nach einer aktuellen Zeit; wenn detektiert wird, dass die aktuelle Öffnung des Bremspedals größer ist als ein zweiter Schwellwert und die aktuelle Öffnungsänderungsrate des Bremspedals größer ist als ein dritter Schwellwert, Korrigieren der ersten Notbremswahrscheinlichkeit zu 1; andernfalls Korrigieren der ersten Notfallwahrscheinlichkeit zu 0.

4. Verfahren nach Anspruch 1, wobei das Bestimmen einer zweiten Notbremswahrscheinlichkeit auf Basis der aktuellen Geschwindigkeit des Fahrzeugs, des aktuellen Abstands zwischen dem Fahrzeug und dem davor befindlichen Objekt und der aktuellen Geschwindigkeit des davor befindlichen Objekts Folgendes umfasst:

Bestimmen einer kritischen Sollverzögerung des Fahrzeugs auf Basis der aktuellen Geschwindigkeit des Fahrzeugs, des aktuellen Abstands zwischen dem Fahrzeug und dem davor befindlichen Objekt und der aktuellen Geschwindigkeit des davor befindlichen Objekts und

Bestimmen einer zweiten Notbremswahrscheinlichkeit, die der kritischen Sollverzögerung entspricht, auf Basis einer vorab gespeicherten Entsprechung zwischen einer kritischen Verzögerung und der Notbremswahrscheinlichkeit.

5. Verfahren nach einem der Ansprüche 1 bis 4, wobei das Bestimmen (203) einer Motorbremskraft und einer hydraulischen Bremskraft, die auf Basis der Notbremswahrscheinlichkeit und der Gesamtbremskraft zum Bremsen des Fahrzeugs erforderlich sind, Folgendes umfasst:

Bestimmen eines Motorbremskraftgrenzwerts, der der Notbremswahrscheinlichkeit des Fahrzeugs entspricht, auf Basis einer vorab gespeicherten Entsprechung zwischen der Notbremswahrscheinlichkeit und dem Motorbremskraftgrenzwert,

Bestimmen der Motorbremskraft, die zum Bremsen des Fahrzeugs erforderlich ist, auf Basis des Motorbremskraftgrenzwerts, der der Notbremswahrscheinlichkeit des Fahrzeugs entspricht; und

Bestimmen der hydraulischen Bremskraft, die zum Bremsen des Fahrzeugs erforderlich ist, auf Basis einer Differenz zwischen der Gesamtbremskraft und der Motorbremskraft.

6. Verfahren nach Anspruch 5, wobei das Bestimmen der Motorbremskraft, die zum Bremsen des Fahrzeugs erforderlich ist, auf Basis des Motorbremskraftgrenzwerts, der der Notbremswahrscheinlichkeit des Fahrzeugs entspricht, Folgendes umfasst:

wenn der Motorbremskraftgrenzwert, der der Notbremswahrscheinlichkeit des Fahrzeugs entspricht, größer ist als eine maximale Motorbremskraft, Bestimmen, dass die Motorbremskraft, die zum Bremsen des Fahrzeugs erforderlich ist, der Motorbremskraftgrenzwert ist, der der Notbremswahrscheinlichkeit des Fahrzeugs entspricht, wobei die maximale Motorbremskraft eine maximale Bremskraft ist, die das Motorbremssystem des Fahrzeugs bereitstellen kann; und
wenn der Motorbremskraftgrenzwert, der der Notbremswahrscheinlichkeit des Fahrzeugs entspricht, kleiner ist als die maximale Motorbremskraft, Bestimmen, dass die Motorbremskraft, die zum Bremsen des Fahrzeugs erforderlich ist, die maximale Motorbremskraft ist.

7. Verfahren nach einem der Ansprüche 1 bis 4, wobei das Bestimmen (203) einer Motorbremskraft und einer hydraulischen Bremskraft, die auf Basis der Notbremswahrscheinlichkeit und der Gesamtbremskraft zum Bremsen des Fahrzeugs erforderlich sind, Folgendes umfasst:

Bestimmen eines Bremskraftzuweisungsanteils, der der Notbremswahrscheinlichkeit des Fahrzeugs entspricht, auf Basis einer Entsprechung zwischen der Notbremswahrscheinlichkeit und dem Bremskraftzuweisungsanteil und Bestimmen der Motorbremskraft und der hydraulischen Bremskraft, die zum Bremsen des Fahrzeugs erforderlich sind, auf Basis des Bremskraftzuweisungsanteils, der der Notbremswahrscheinlichkeit des Fahrzeugs entspricht, und der Gesamtbremskraft.

8. Steuervorrichtung für eine Fahrzeugbremsung, wobei die Steuervorrichtung Folgendes umfasst:

ein Erhaltungsmodul (1201), das dazu ausgelegt ist, eine Notbremswahrscheinlichkeit eines Fahrzeugs zu erhalten, wobei die Notbremswahrscheinlichkeit verwendet wird, um eine Möglichkeit des Durchführens einer Bremsung durch das Fahrzeug anzuzeigen;
ein Bestimmungsmodul (1202), das dazu ausgelegt ist, eine Gesamtbremskraft zu bestimmen, die auf Basis einer aktuellen Geschwindigkeit des Fahrzeugs und einer aktuellen Öffnung eines Bremspedals des Fahrzeugs zum Bremsen des Fahrzeugs erforderlich ist;
ein Zuweisungsmodul (1203), das dazu ausgelegt ist, eine Motorbremskraft und eine hydraulische Bremskraft zu bestimmen, die auf Basis der Notbremswahrscheinlichkeit und der Gesamtbremskraft zum Bremsen des Fahrzeugs erforderlich sind, und
ein Steuermodul (1204), das dazu ausgelegt ist, auf Basis der Motorbremskraft und der hydraulischen Bremskraft ein Steuersignal an ein Motorbremssystem und ein hydraulisches Bremssystem des Fahrzeugs zu senden, derart, dass das Motorbremssystem die Motorbremskraft und das hydraulische Bremssystem die hydraulische Bremskraft bereitstellt,
wobei das Erhaltungsmodul (1201) zu Folgendem ausgelegt ist:

Bestimmen einer ersten Notbremswahrscheinlichkeit auf Basis der aktuellen Öffnungsänderungsrate des Gaspedals des Fahrzeugs und der aktuellen Geschwindigkeit des Fahrzeugs,
Bestimmen einer zweiten Notbremswahrscheinlichkeit auf Basis der aktuellen Geschwindigkeit des Fahrzeugs, des aktuellen Abstands zwischen dem Fahrzeug und einem davor befindlichen Objekt und der aktuellen Geschwindigkeit des davor befindlichen Objekts und
Bestimmen der Notbremswahrscheinlichkeit des Fahrzeugs auf Basis der ersten Notbremswahrscheinlichkeit und der zweiten Notbremswahrscheinlichkeit.

9. Steuervorrichtung nach Anspruch 8, wobei das Erhaltungsmodul (1201) zu Folgendem ausgelegt ist:

Bestimmen einer Referenzöffnungsänderungsrate, die der aktuellen Öffnungsänderungsrate des Gaspedals des Fahrzeugs und der aktuellen Geschwindigkeit des Fahrzeugs entspricht, auf Basis einer vorab gespeicherten Entsprechung der Geschwindigkeit des Fahrzeugs, der Öffnung des Gaspedals und einer Referenzöffnungsänderungsrate des Gaspedals;
Bestimmen einer ersten Differenz zwischen der aktuellen Öffnungsänderungsrate des Gaspedals und der bestimmten Referenzöffnungsänderungsrate und
Bestimmen der ersten Notbremswahrscheinlichkeit, die der ersten Differenz entspricht, auf Basis einer vorab gespeicherten Entsprechung zwischen der Differenz und der Notbremswahrscheinlichkeit.

10. Steuervorrichtung nach Anspruch 8, wobei das Erhaltungsmodul (1201) zu Folgendem ausgelegt ist:

Bestimmen einer kritischen Sollverzögerung des Fahrzeugs auf Basis der aktuellen Geschwindigkeit des Fahrzeugs, des aktuellen Abstands zwischen dem Fahrzeug und dem davor befindlichen Objekt und der aktuellen Geschwindigkeit des davor befindlichen Objekts und

Bestimmen der zweiten Notbremswahrscheinlichkeit, die der kritischen Sollverzögerung entspricht, auf Basis einer vorab gespeicherten Entsprechung zwischen einer kritischen Verzögerung und der Notbremswahrscheinlichkeit.

11. Steuervorrichtung nach einem der Ansprüche 8 bis 10, wobei das Bestimmungsmodul (1202) zu Folgendem ausgelegt ist:

Bestimmen eines Motorbremskraftgrenzwerts, der der Notbremswahrscheinlichkeit des Fahrzeugs entspricht, auf Basis einer vorab gespeicherten Entsprechung zwischen der Notbremswahrscheinlichkeit und dem Motorbremskraftgrenzwert,
Bestimmen der Motorbremskraft, die zum Bremsen des Fahrzeugs erforderlich ist, auf Basis des Motorbremskraftgrenzwerts, der der Notbremswahrscheinlichkeit des Fahrzeugs entspricht; und
Bestimmen der hydraulischen Bremskraft, die zum Bremsen des Fahrzeugs erforderlich ist, auf Basis einer Differenz zwischen der Gesamtbremskraft und der Motorbremskraft.

12. Steuervorrichtung nach Anspruch 11, wobei das Bestimmungsmodul (1202) zu Folgendem ausgelegt ist:

wenn der Motorbremskraftgrenzwert, der der Notbremswahrscheinlichkeit des Fahrzeugs entspricht, größer ist als eine maximale Motorbremskraft, Bestimmen, dass die Motorbremskraft, die zum Bremsen des Fahrzeugs erforderlich ist, der Motorbremskraftgrenzwert ist, der der Notbremswahrscheinlichkeit des Fahrzeugs entspricht, wobei die maximale Motorbremskraft eine maximale Bremskraft ist, die das Motorbremssystem des Fahrzeugs bereitstellen kann; und
wenn der Motorbremskraftgrenzwert, der der Notbremswahrscheinlichkeit des Fahrzeugs entspricht, kleiner ist als die maximale Motorbremskraft, Bestimmen, dass die Motorbremskraft, die zum Bremsen des Fahrzeugs erforderlich ist, die maximale Motorbremskraft ist.

13. Steuervorrichtung nach einem der Ansprüche 8 bis 10, wobei das Bestimmungsmodul (1202) zu Folgendem ausgelegt ist:

Bestimmen eines Bremskraftzuweisungsanteils, der der Notbremswahrscheinlichkeit des Fahrzeugs entspricht, auf Basis einer Entsprechung zwischen der Notbremswahrscheinlichkeit und dem Bremskraftzuweisungsanteil und
Bestimmen der Motorbremskraft und der hydraulischen Bremskraft, die zum Bremsen des Fahrzeugs erforderlich sind, auf Basis des Bremskraftzuweisungsanteils, der der Notbremswahrscheinlichkeit des Fahrzeugs entspricht, und der Gesamtbremskraft.

**Revendications**

1. Procédé de commande de freinage de véhicule, le procédé de commande comprenant :

l'obtention (201) d'une probabilité de freinage d'urgence d'un véhicule, la probabilité de freinage d'urgence étant utilisée pour indiquer une possibilité de réalisation d'un freinage d'urgence par le véhicule ;
la détermination (202) de la force de freinage totale requise pour le freinage du véhicule sur la base d'une vitesse actuelle du véhicule et d'une ouverture actuelle d'une pédale de frein du véhicule ;
la détermination (203) d'une force de freinage moteur et d'une force de freinage hydraulique requises pour le freinage du véhicule sur la base de la probabilité de freinage d'urgence et de la force de freinage totale ; et
l'envoi (204) d'un signal de commande à un système de freinage moteur et à un système de freinage hydraulique du véhicule sur la base de la force de freinage moteur et de la force de freinage hydraulique, de sorte que le système de freinage moteur fournisse la force de freinage moteur et que le système de freinage hydraulique fournisse la force de freinage hydraulique
l'obtention (201) d'une probabilité de freinage d'urgence d'un véhicule comprenant :

la détermination d'une première probabilité de freinage d'urgence sur la base du taux de changement d'ouverture actuel de la pédale d'accélérateur du véhicule et de la vitesse actuelle du véhicule ;
la détermination d'une deuxième probabilité de freinage d'urgence sur la base de la vitesse actuelle du véhicule, de la distance actuelle entre le véhicule et un objet devant, et de la vitesse actuelle de l'objet devant ; et
la détermination de la probabilité de freinage d'urgence du véhicule sur la base de la première probabilité de freinage d'urgence et de la deuxième probabilité de freinage d'urgence.

2. Procédé selon la revendication 1, dans lequel la détermination d'une première probabilité de freinage d'urgence sur la base du taux de changement d'ouverture actuel de la pédale d'accélérateur du véhicule et de la vitesse actuelle du véhicule comprend :

la détermination d'un taux de changement d'ouverture de référence correspondant au taux de changement d'ouverture actuel de la pédale d'accélérateur du véhicule et de la vitesse actuelle du véhicule sur la base d'une correspondance préenregistrée parmi la vitesse du véhicule, l'ouverture de la pédale d'accélérateur et un taux de changement d'ouverture de référence de la pédale d'accélérateur ;
la détermination d'une première différence entre le taux de changement d'ouverture actuel de la pédale d'accélérateur, et le taux de changement d'ouverture de référence déterminé ; et
la détermination de la première probabilité de freinage d'urgence correspondant à la première différence sur la base d'une correspondance préenregistrée entre la différence et la probabilité de freinage d'urgence.

3. Procédé selon la revendication 1, après la détermination d'une première probabilité de freinage d'urgence, le procédé comprenant en outre :
si le taux de changement d'ouverture actuel de la pédale d'accélérateur est supérieur à un premier seuil, la détection d'une ouverture de la pédale de frein du véhicule pendant une durée prédéfinie après un temps actuel ; s'il est détecté que l'ouverture actuelle de la pédale de frein est supérieure à un deuxième seuil, et que le taux de changement d'ouverture actuel de la pédale de frein est supérieur à un troisième seuil, la correction de la première probabilité de freinage d'urgence à 1 ; sinon, la correction de la première probabilité de freinage d'urgence à 0.

4. Procédé selon la revendication 1, dans lequel la détermination d'une deuxième probabilité de freinage d'urgence sur la base de la vitesse actuelle du véhicule, de la distance actuelle entre le véhicule et l'objet devant, et de la vitesse actuelle de l'objet devant, comprend :

la détermination d'une décélération critique cible du véhicule sur la base de la vitesse actuelle du véhicule, de la distance actuelle entre le véhicule et l'objet devant, et de la vitesse actuelle de l'objet devant ; et
la détermination de la deuxième probabilité de freinage d'urgence correspondant à la décélération critique cible sur la base d'une correspondance préenregistrée entre une décélération critique et la probabilité de freinage d'urgence.

5. Procédé selon l'une quelconque des revendications 1 à 4, dans lequel la détermination (203) de la force de freinage moteur et de la force de freinage hydraulique requises pour le freinage du véhicule sur la base de la probabilité de freinage d'urgence et de la force de freinage totale comprend :

la détermination d'une limite de force de freinage moteur correspondant à la probabilité de freinage d'urgence du véhicule sur la base d'une correspondance préenregistrée entre la probabilité de freinage d'urgence et la limite de force de freinage moteur ;
la détermination de la force de freinage moteur requise pour le freinage du véhicule sur la base de la limite de force de freinage moteur correspondant à la probabilité de freinage d'urgence du véhicule ; et
la détermination de la force de freinage hydraulique requise pour le freinage du véhicule sur la base d'une différence entre la force de freinage totale et la force de freinage moteur.

6. Procédé selon la revendication 5, dans lequel la détermination de la force de freinage moteur requise pour le freinage du véhicule sur la base de la limite de force de freinage moteur correspondant à la probabilité de freinage d'urgence du véhicule comprend :

si la limite de force de freinage moteur correspondant à la probabilité de freinage d'urgence du véhicule est supérieure à une force de freinage moteur maximale, la détermination que la force de freinage moteur requise pour le freinage du véhicule est la limite de force de freinage moteur correspondant à la probabilité de freinage d'urgence du véhicule, la force de freinage moteur maximale étant une force de freinage maximale que le système de freinage moteur du véhicule peut fournir ; et
si la limite de force de freinage moteur correspondant à la probabilité de freinage d'urgence du véhicule est inférieure à la force de freinage moteur maximale, la détermination que la force de freinage moteur requise pour le freinage du véhicule est la force de freinage moteur maximale.

7. Procédé selon l'une quelconque des revendications 1 à 4, dans lequel la détermination (203) de la force de freinage moteur et de la force de freinage hydraulique requises pour le freinage du véhicule sur la base de la probabilité de freinage d'urgence et de la force de freinage totale comprend :

la détermination d'une proportion d'attribution de force de freinage correspondant à la probabilité de freinage d'urgence du véhicule sur la base d'une correspondance entre la probabilité de freinage d'urgence et la proportion d'attribution de force de freinage ; et

la détermination de la force de freinage moteur et de la force de freinage hydraulique requises pour le freinage du véhicule sur la base de la proportion d'attribution de force de freinage correspondant à la probabilité de freinage d'urgence du véhicule et de la force de freinage totale.

8. Appareil de commande de freinage de véhicule, l'appareil de commande comprenant :

un module d'obtention (1201), configuré pour obtenir une probabilité de freinage d'urgence d'un véhicule, la probabilité de freinage d'urgence étant utilisée pour indiquer une possibilité de réalisation d'un freinage par le véhicule ;

un module de détermination (1202), configuré pour déterminer une force de freinage totale requise pour le freinage du véhicule sur la base d'une vitesse actuelle du véhicule et d'une ouverture actuelle d'une pédale de frein du véhicule ;

un module d'attribution (1203), configuré pour déterminer une force de freinage moteur et une force de freinage hydraulique requises pour le freinage du véhicule sur la base de la probabilité de freinage d'urgence et de la force de freinage totale ; et

un module de commande (1204), configuré pour envoyer un signal de commande à un système de freinage moteur et à un système de freinage hydraulique du véhicule sur la base de la force de freinage moteur et de la force de freinage hydraulique, de sorte que le système de freinage moteur fournisse la force de freinage moteur et que le système de freinage hydraulique fournisse la force de freinage hydraulique ;

le module d'obtention (1201) étant configuré pour :

déterminer une première probabilité de freinage d'urgence sur la base du taux de changement d'ouverture actuel de la pédale d'accélérateur du véhicule et de la vitesse actuelle du véhicule ;

déterminer une deuxième probabilité de freinage d'urgence sur la base de la vitesse actuelle du véhicule, de la distance actuelle entre le véhicule et un objet devant, et de la vitesse actuelle de l'objet devant ; et

déterminer la probabilité de freinage d'urgence du véhicule sur la base de la première probabilité de freinage d'urgence et de la deuxième probabilité de freinage d'urgence.

9. Appareil de commande selon la revendication 8, dans lequel le module d'obtention (1201) est configuré pour :

déterminer un taux de changement d'ouverture de référence correspondant au taux de changement d'ouverture actuel de la pédale d'accélérateur du véhicule et de la vitesse actuelle du véhicule sur la base d'une correspondance préenregistrée parmi la vitesse du véhicule, l'ouverture de la pédale d'accélérateur et un taux de changement d'ouverture de référence de la pédale d'accélérateur ;

déterminer une première différence entre le taux de changement d'ouverture actuel de la pédale d'accélérateur et le taux de changement d'ouverture de référence déterminé ; et

déterminer la première probabilité de freinage d'urgence correspondant à la première différence sur la base d'une correspondance préenregistrée entre la différence et la probabilité de freinage d'urgence.

10. Appareil de commande selon la revendication 8, dans lequel le module d'obtention (1201) est configuré pour :

déterminer une décélération critique cible du véhicule sur la base de la vitesse actuelle du véhicule, de la distance actuelle entre le véhicule et l'objet devant, et de la vitesse actuelle de l'objet devant ; et

déterminer la deuxième probabilité de freinage d'urgence correspondant à la décélération critique cible sur la base d'une correspondance préenregistrée entre une décélération critique et la probabilité de freinage d'urgence.

11. Appareil de commande selon l'une quelconque des revendications 8 à 10, dans lequel le module de détermination (1202) est configuré pour :

déterminer une limite de force de freinage moteur correspondant à la probabilité de freinage d'urgence du véhicule sur la base d'une correspondance préenregistrée entre la probabilité de freinage d'urgence et la limite de force de freinage moteur ;

déterminer la force de freinage moteur requise pour le freinage du véhicule sur la base de la limite de force de freinage moteur correspondant à la probabilité de freinage d'urgence du véhicule ; et

déterminer la force de freinage hydraulique requise pour le freinage du véhicule sur la base d'une différence entre la force de freinage totale et la force de freinage moteur.

**12.** Appareil de commande selon la revendication 11, dans lequel le module de détermination (1202) est configuré pour :

si la limite de force de freinage moteur correspondant à la probabilité de freinage d'urgence du véhicule est supérieure à une force de freinage moteur maximale, déterminer que la force de freinage moteur requise pour le freinage du véhicule est la limite de force de freinage moteur correspondant à la probabilité de freinage d'urgence du véhicule, la force de freinage moteur maximale étant une force de freinage maximale que le système de freinage moteur du véhicule peut fournir ; et
si la limite de force de freinage moteur correspondant à la probabilité de freinage d'urgence du véhicule est inférieure à la force de freinage moteur maximale, déterminer que la force de freinage moteur requise pour le freinage du véhicule est la force de freinage moteur maximale.

**13.** Appareil de commande selon l'une quelconque des revendications 8 à 10, dans lequel le module de détermination (1202) est configuré pour :

déterminer une proportion d'attribution de force de freinage correspondant à la probabilité de freinage d'urgence du véhicule sur la base d'une correspondance préenregistrée entre la probabilité de freinage d'urgence et la proportion d'attribution de force de freinage ; et
déterminer la force de freinage moteur et la force de freinage hydraulique requises pour le freinage du véhicule sur la base de la proportion d'attribution de force de freinage correspondant à la probabilité de freinage d'urgence du véhicule et de la force de freinage totale.

FIG. 1A

110

**VCU**

Processor — 1101

Memory — 1102

## FIG. 1B

Obtain an emergency braking probability of a vehicle, where the emergency braking probability is used to indicate a possibility of performing emergency braking by the vehicle — 201

Determine total braking force required for braking of the vehicle based on a current velocity of the vehicle and a current opening of a brake pedal of the vehicle — 202

Determine motor braking force and hydraulic braking force required for braking of the vehicle based on the emergency braking probability and the total braking force — 203

Send a control signal to a motor braking system and a hydraulic braking system of the vehicle based on the motor braking force and the hydraulic braking force, so that the motor braking system provides the motor braking force and the hydraulic braking system provides the hydraulic braking force — 204

## FIG. 2

FIG. 3

FIG. 4A

Emergency braking probability 1

100%

a2          b2   0

Opening change rate of accelerator pedal minus
reference opening change rate of accelerator pedal

FIG. 4B

Emergency braking probability

100%

0

c          d          Critical deceleration

FIG. 5

FIG. 6

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010299036 A1